(19) Europäisches Patentamt
European Patent Office
Office européen des brevets

(11) EP 4 551 657 B1

(12) EUROPEAN PATENT SPECIFICATION

(45) Date of publication and mention of the grant of the patent:
**29.04.2026 Bulletin 2026/18**

(21) Application number: **23734329.8**

(22) Date of filing: **03.07.2023**

(51) International Patent Classification (IPC):
***C09D 11/03*** *(2014.01)* ***C09D 11/033*** *(2014.01)*
***C09D 11/12*** *(2006.01)* ***C09F 9/00*** *(2006.01)*
***B41M 3/14*** *(2006.01)* ***B41M 1/10*** *(2006.01)*

(52) Cooperative Patent Classification (CPC):
**C09D 11/03; B41M 1/10; B41M 3/14; B42D 25/369; B42D 25/378; B42D 25/382; C09D 11/033; C09D 11/12**

(86) International application number:
**PCT/EP2023/068203**

(87) International publication number:
**WO 2024/008632 (11.01.2024 Gazette 2024/02)**

(54) **INTAGLIO PRINTING PROCESSES FOR PRODUCING SECURITY FEATURES MADE OF OXIDATIVE DRYING INTAGLIO INKS**

TIEFDRUCKVERFAHREN ZUR HERSTELLUNG VON SICHERHEITSMERKMALEN AUS OXIDATIV TROCKNENDEN TIEFDRUCKFARBEN

PROCÉDÉS D'IMPRESSION EN CREUX POUR LA PRODUCTION D'ÉLÉMENTS DE SÉCURITÉ CONSTITUÉS D'ENCRES EN CREUX À SÉCHAGE OXYDATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**MA**

(30) Priority: **06.07.2022 EP 22183328**

(43) Date of publication of application:
**14.05.2025 Bulletin 2025/20**

(73) Proprietor: **SICPA HOLDING SA**
**1008 Prilly (CH)**

(72) Inventors:
- **LEFEBVRE, Olivier**
  **1442 Montagny-près-Yverdon (CH)**
- **SABOURIN, Maxime**
  **1007 Lausanne (CH)**
- **MAGNIN, Patrick**
  **74500 Publier (FR)**
- **BRIGNOLI, Yann**
  **1180 Rolle (CH)**

(74) Representative: **Hoffmann Eitle**
**Patent- und Rechtsanwälte PartmbB**
**Arabellastraße 30**
**81925 München (DE)**

(56) References cited:
**EP-A1- 1 790 701**
**WO-A1-2012/069518**
**WO-A1-2020/079154**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 551 657 B1

## Description

The present invention relates to the field of the protection of value documents against counterfeit and illegal reproduction. In particular, the present invention relates to the field of oxidative drying inks suitable for intaglio printing of value documents and intaglio printing processes using oxidative drying inks.

## BACKGROUND OF THE INVENTION

With the constantly improving quality of color photocopies and printings and in an attempt to protect security documents such as banknotes, value documents or cards, transportation tickets or cards, tax banderols, and product labels that have no reproducible effects against counterfeiting, falsifying or illegal reproduction, it has been the conventional practice to incorporate various security means features in these documents.

Intaglio printing processes refer to printing methods and processes used in particular in the field of value documents. The intaglio printing process is known to be the most consistent and high quality printing process for producing fine tapering lines and is therefore the printing technology of choice for fine design in the field of security documents, in particular banknotes and stamps. In particular, one of the distinguishing features of the intaglio printing process is that the layer thickness of the ink transferred to the substrate may be varied from a few micrometers to several tens of micrometers by using correspondingly shallow or deep engravings on the intaglio printing device. As mentioned hereabove, the layer thickness of intaglio printed security features thus allows a sufficiently high amount of material on the substrate for its detection and sensing.

Oxidative drying inks are commonly used for intaglio printing processes. Said inks dry by oxidation in the presence of oxygen, in particular in the presence of the oxygen of the atmosphere. During the drying process, the oxygen combines with one or more components of the ink vehicle, converting the ink to a semi-solid or a solid state. The process may be accelerated by the use of driers also referred in the art as catalysts, siccative agents, desiccatives or dessicators, such as metallic salts and/or by the application of a thermal treatment.

Oxidative drying intaglio inks may suffer from a so-called "set-off" problem which is the transfer of ink from one printed sheet to the back side of the next following printed sheet in the stack, or to the back of an endless sheet in a web. Although this problem may be encountered with any industrial printing process using oxidative drying inks, the pronounced relief of intaglio printed patterns may accentuate the problem of set-off. With the state of the art oxidative drying intaglio inks, the set-off issue has been mainly reduced through the optimization of the ink formulation. As prior art WO 2020079154 might be cited.

There remains a need for intaglio printing processes using oxidative drying intaglio for producing security feature exhbiting good drying performance and set-off characteristics so as to avoid set-off problems.

## SUMMARY

Accordingly, it is an object of the present invention to overcome the deficiencies of the prior art discussed above. This is achieved by the provision of taking advantage of oxidative drying intaglio inks comprising one or more polythiol compounds and one or more fusible waxes.

Described herein are processes for producing a security feature on a substrate by an intaglio printing process as well as security features obtained thereof, said process comprising:

a step a) of inking an intaglio engraved printing plate with an oxidative drying intaglio ink, said intaglio engraved printing plate being at a printing plate temperature between about 45°C and about 85°C, said oxidative drying intaglio ink comprising:

i) at least one oxidative drying varnish,
ii) one or more driers in a total amount from about 0.01 wt-% to about 10 wt-%,
iii) one or more polythiol compounds present in a total amount larger than 0.5 wt-%, preferably in a total amount from about 0.75 wt-% to about 2 wt-%, and
iv) one or more fusible waxes present in a total amount from about 1 wt-% to about 10 wt-%,

the weight percents being based on the total weight of the oxidative drying intaglio ink;
a step b) of wiping off any excess the oxidative drying intaglio ink using a paper or a tissue wiping system or using a polymeric wiping cylinder and cleaning said polymeric wiping cylinder with an alkaline aqueous wiping solution in combination with one or more mechanical means;
a step c) of transferring said oxidative drying intaglio ink in the form of the security feature on the substrate; and
a step d) of drying the oxidative drying intaglio ink in the presence of air so as to form the security feature.

## DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the terms "about" means that the amount or value in question may be the value designated or some other value about the same. The phrases are intended to convey that similar values within a range of ±5% of the indicated value promote equivalent results or effects according to the invention.

As used herein, the term "and/or" or "or/and" means that either all or only one of the elements of said group may be present. For example, "A and/or B" shall mean "only A, or only B, or both A and B".

As used herein, the term "at least" is meant to define one or more than one, for example one or two or three.

The term "security feature" is used to denote an image, pattern or graphic element that can be used for authentication purposes.

The present invention provides oxidative drying intaglio inks suitable for intaglio printing processes, in particular for intaglio printing processes for producing security features on value documents.

Also described herein are security features made by the process described herein and made of the oxidative drying intaglio ink described herein and value documents comprising one or more of said security features. Also described herein are uses of the security features described herein for the protection of a value document against fraud or illegal reproduction.

Intaglio printing refers to a printing method and process used in particular in the field of printing value documents. In an industrial intaglio printing process, a rotating steel cylinder carrying a plate engraved with a pattern or image to be printed is supplied with ink by one or by a plurality of selective inking cylinder(s) (or chablon cylinders), each selective inking cylinder being inked in at least one corresponding color.

Also described herein are processes for producing a security feature as well as security features obtained thereof. The process described herein comprises a step a) of inking an intaglio engraved printing plate with the oxidative drying intaglio ink described herein, said intaglio engraved printing plate being at a printing plate temperature between about 45°C and about 85°C. The step a) of inking the intaglio engraved printing plate with the oxidative drying intaglio ink described herein onto a substrate such as those described herein is typically performed with an intaglio plate having zones of different engraving depth and/or width.

The process further comprises a step b) of wiping off the excess of oxidative drying intaglio ink from the printing plate using a paper or a tissue wiping system or using a polymeric wiping cylinder and cleaning said polymeric wiping cylinder with an alkaline aqueous wiping solution in combination with one or more mechanical means, said step of wiping off being performed after the step a). Preferably, the step b) of wiping off any excess the oxidative drying intaglio ink is carried out by using a polymeric wiping cylinder and cleaning said polymeric wiping cylinder with an alkaline aqueous wiping solution in combination with one or more mechanical means, wherein the wiping cylinder is typically a cylinder coated with a material to which the ink adheres easily (such as for example polyvinyl chloride (PVC), wherein the alkaline aqueous wiping solution typically comprises caustic soda and surfactant (such as for example sulfated/sulfonated castor oil) and wherein the mechanical means may be one or more brushes and/or pads (e.g. Scotch-Brite™ pads).

The process further comprises a step c) of transferring said oxidative drying intaglio ink in the form of the security feature on the substrate, said step of drying being performed after the step b). The step c) consists of bringing into contact the substrate which may be in sheet form or web form with the intaglio engraved printing plate so that the oxidative drying intaglio ink is transferred under pressure from the engravings of said printing plate onto the substrate to be printed thus forming the security feature in the form of a thick relief printing pattern on the substrate. Typically, the security features is deposited on the substrate at a very high pressure.

The process further comprises a step d) of drying the oxidative drying intaglio ink described herein in the presence of air so as to form a layer or coating in the form of the security feature described herein on the substrate, said step d) of drying being performed after the step c). The step d) of drying the oxidative drying intaglio ink described herein may be performed under hot air, with an infrared source or any combination of hot air and an infrared source so as to decrease the drying time of said inks.

The oxidative drying intaglio inks for intaglio printing processes described herein have a viscosity in the range of about 3 to about 60 Pa s at 40°C and 1000 $s^{-1}$, said viscosity being measured using a Haake Roto Visco RV1 rotational rheometer, using a cone plate of 20 mm diameter and a 0.5° geometry, at a shear rate of 1000 $s^{-1}$ and a temperature of 40°C. The oxidative drying intaglio inks described herein comprise at least one oxidative drying varnish such as those described herein, one or more driers such as those described herein, one or more polythiol compounds such as those described herein, one or more fusible waxes such as those described herein and optionally one or more compounds, additives and/or ingredients such as those described herein.

The oxidative drying intaglio inks described herein comprise at least one oxidative drying varnish. The term

"varnish" is also referred in the art as resin, binder or ink vehicle. The at least one oxidative drying varnish is preferably present in the oxidative drying intaglio inks described herein in an amount from about 10 to about 90 wt-%, the weight percents being based on the total weight of the oxidative drying intaglio ink.

Oxidative drying varnishes are typically polymers comprising unsaturated fatty acid residues, saturated fatty acids residues or mixtures thereof, as generally known in the art. Preferably the oxidative drying varnishes described herein comprise unsaturated fatty acid residues to ensure the air drying properties. Particularly preferred oxidative drying varnishes are resins comprising unsaturated acid groups, even more preferred are resins comprising unsaturated carboxylic acid groups. However the resins may also comprise saturated fatty acids residues. Preferably the oxidative drying varnishes described herein comprise acid groups, i.e. the oxidative drying varnishes are selected among acid modified resins. The oxidative drying varnishes described herein may be selected from the group consisting of alkyd resins, vinyl polymers, polyurethane resins, hyperbranched resins, rosin-modified maleic resins, rosin-modified phenol resins, rosin esters, petroleum resin-modified rosin esters, petroleum resin-modified alkyd resins, alkyd resin-modified rosin/phenol resins, alkyd resin-modified rosin esters, acrylic-modified rosin/phenol resins, acrylic-modified rosin esters, urethane-modified rosin/phenol resins, urethane-modified rosin esters, urethane-modified alkyd resins, epoxy-modified rosin/phenol resins, epoxy-modified alkyd resins, terpene resins, nitrocellulose resins, polyolefins, polyamides, acrylic resins and combinations or mixtures thereof. Polymers and resins are herein interchangeably used.

Saturated and unsaturated fatty acid compounds may be obtained from natural and/or artificial sources. Natural sources include animal sources and/or plant sources. Animal sources may comprise animal fat, butter fat, fish oil, lard, liver fats, tuna fish oil, sperm whale oil and/or tallow oil. Plant sources may comprise oils such as vegetable oils and/or non-vegetable oils. Examples of plant oils include without limitation bitter gourd, borage, calendula, canola, castor, china wood, coconut, conifer seed, corn, cottonseed, dehydrated castor, flaxseed, grape seed, *Jacaranda mimosifolia* seed, linseed oil, palm, palm kernel, peanut, pomegranate seed, rapeseed, safflower, snake gourd, soya (bean), sunflower, tall, tung and wheat germ. Artificial sources include distilled tall oil and/or chemical or biochemical synthesis methods. Suitable fatty acids also include myristoleic acid ($C_{14}H_{26}O_2$, CAS No 544-64-9), palmitoleic acid ($C_{16}H_{30}O_2$, CAS No 373-49-9), oleic acid ($C_{18}H_{34}O_2$, CAS No 112-80-1), $\alpha$-eleostearic acid ($C_{18}H_{30}O_2$, CAS No 506-23-0), licanic acid ($C_{18}H_{28}O_3$, CAS No 623-99-4), linoleic acid ($C_{18}H_{32}O_2$, CAS No 60-33-3), linolenic acid ($C_{18}H_{30}O_2$, CAS No 463-40-1), stearidonic acid ($C_{18}H_{28}O_2$, CAS No 20290-75-9), arachidonic acid ($C_{20}H_{32}O_2$, CAS No 506-32-1), ricinoleic acid ($C_{18}H_{34}O_3$, CAS No 141-22-0), erucic acid ($C_{22}H_{42}O_2$, CAS No 112-86-7), gadoleic acid ($C_{20}H_{38}O_2$, CAS No 29204-02-2), clupanodonic acid ($C_{22}H_{34}O_2$, CAS No 24880-45-3), nisinic acid ($C_{24}H_{36}O_2$, CAS No 68378-49-4) and mixtures thereof. Those fatty acids are typically used in the form of mixtures of fatty acids derived from natural or synthetic oils.

The oxidative drying intaglio inks described herein comprise one or more polythiol compounds, wherein "polythiol compounds" refer to chemical compounds having at least two thiol functional groups (-SH) per molecule and are also referred in the art as polyfunctional mercapto compounds. Preferably, the one or more polythiol compounds described herein are selected from the group consisting of dithiol compounds (i.e. compounds comprising two thiol functional groups), trithiol compounds (i.e. compounds comprising three thiol functional groups), tetrathiol compounds (i.e. compounds comprising four thiol functional groups, pentathiol compounds (i.e. compounds comprising five thiol functional groups), hexathiol compounds (i.e. compounds comprising six thiol functional groups) and mixtures thereof, more preferably selected from the group consisting of dithiol compounds, trithiol compounds, tetrathiol compounds and mixtures thereof.

Preferred examples of dithiol compounds are 3-oxa-1,5-pentanedithiol (CAS No 111-46-6) 1,5-pentanedithiol (CAS No 928-98-3), 1,3-pentanedithiol (CAS No 188194-74-3), 1,6-hexanedithiol (CAS No 1191-43-1), 4-mercapto-cyclohexaneethanethiol (CAS No 3232-05-1), 3-mercapto-cyclohexaneethanethiol (CAS No 17809-99-3), 2,2'-thiobis(ethanethiol) (CAS No 3570-55-6), 1-[(2-mercaptoethyl)thio]-2-propanethiol](CAS No 35330-71-3), 1,1'-thiobis[2-propanethiol] (CAS No 35330-70-2), 2,2'-[1,2-ethanediylbis(thio)]bis[ethanethiol] (CAS No 25423-55-6), 2,2'-[thiobis(2,1-ethanediylthio)]bis[ethanethiol] (CAS No 60147-09-3), bis-(4-mercaptomethylphenyl) ether (CAS No 7344-22-1), ethylene glycol bis(3-mercaptoacetate) (CAS No 123-81-9, commercially available as THIOCURE® GDMA from BRUNO BOCK Chemische Fabrik GmbH & Co. KG), propanoic acid, 3-mercapto-,1,1'-(1,6-hexanediyl) ester (CAS No 96663-89-7); propanoic acid, 3-mercapto-,1,1'-(1,4-cyclohexanediyl) ester (CAS No 2227318-91-2); propanoic acid, 3-mercapto-, 1,1'-[(1-methylethylidene)di-4,1-cyclohexanediyl] ester (CAS No 24293-42-3), and ethylene gylcol bis(3-mercaptopropionate) (CAS No 22504-50-3, commercially available as THIOCURE® GDMP from BRUNO BOCK Chemische Fabrik GmbH & Co. KG). Preferably, the one or more dithiol compounds are esters of mercaptopropionic acids with polyols, preferably disubstituted polyols. More preferably, the one or more dithiol compounds are selected from the group consisting of ethylene glycol bis(mercaptoacetate), ethylene glycol bis(3-mercaptopropionate) and mixtures thereof and more preferably at least one of the one or more dithiol compounds is ethylene glycol dimercaptoacetate or ethylene gylcol bis(3-mercaptopropionate) and still more preferably ethylene gylcol bis(3-mercaptopropionate).

Preferred examples of trithiol compounds are glycerol trimercaptoacetate (CAS No 14974-53-9), glycerol trimercaptopropionate (CAS No 26424-84-0), trimethylolpropane trimercaptoacetate (CAS No 10193-96-1, commercially available as THIOCURE® TMPMA from BRUNO BOCK Chemische Fabrik GmbH & Co. KG), trimethylopropane tris-3-mercaptopropionate (CAS No 33007-83-9, commercially available as THIOCURE® TMPM from BRUNO BOCK Chemische Fabrik GmbH & Co. KG), ethoxylated trimethylolpropane tris-3-mercaptopropionate (CAS No 345352-19-4, commercially available as THIOCURE® ETTMP from BRUNO BOCK Chemische Fabrik GmbH & Co. KG), tris[2-(3-mercaptopropionyloxy)ethyl]isocyanurate (CAS No 36196-44-8, commercially available as THIOCURE® TEMPIC from BRUNO BOCK Chemische Fabrik GmbH & Co. KG). Preferably, the one or more trithiol compounds are selected from the group consisting of trimethylopropane tris-3-mercaptopropionate, ethoxylated trimethylolpropane tris-3-mercaptopropionate, tris[2-(3-mercaptopropionyloxy)ethyl]isocyanurate and mixtures thereof, and still more preferably tris[2-(3-mercaptopropionyloxy)-ethyl]isocyanurate.

Preferred examples of tetrathiol compounds are pentaerythritol tetra (mercaptoacetate) (CAS No 10193-99-4, commercially available as THIOCURE® PETMA from BRUNO BOCK Chemische Fabrik GmbH & Co. KG), pentaerythritol tetra(3-mercaptopropionate) (CAS No 7575-23-7, commercially available as THIOCURE® PETMP and THIOCURE® 340 from BRUNO BOCK Chemische Fabrik GmbH & Co. KG), pentaerythritol tetra(4-mercaptobutanoate) (CAS No 916903-92-9) and polycaprolactone tetra(3-mercaptopropionate) (CAS No 1622079-69-9, commercially available as THIOCURE® PCL4MP 1350 from BOCK Chemische Fabrik GmbH & Co. KG), more preferably pentaerythritol tetra(2-mercaptoacetate) and pentaerythritol tetra(3-mercaptopropionate) and still more preferably pentaerythritol tetra(3-mercaptopropionate).

A preferred example of a polythiol compounds having more than four thiol functional groups (-SH) per molecule is dipentaerythritol hexa(3-mercaptopropionate) (CAS No 25359-71-1, commercially available as THIOCURE® DiPETMP from BRUNO BOCK Chemische Fabrik GmbH & Co. KG).

The oxidative drying intaglio inks described herein preferably comprise one or more polythiol compounds selected from the group consisting of dithiol compounds, trithiol compounds, tetrathiol compounds and mixtures thereof and more preferably compounds such as those described hereabove. According to one embodiment, at least one of the dithiol compounds is ethylene gylcol bis(3-mercaptopropionate) and/or at least one of the trithiol compounds is tris[2-(3-mercaptopropionyloxy)ethyl]isocyanurate and/or at least one of the tetrathiol compounds is pentaerythritol tetra(3-mercaptopropionate).

The one or more thiol compounds are present in a total amount larger than about 0.5 wt-%, preferably from about 0.75 wt-% to about 2 wt-%, more preferably from about 1 wt-% to 2 wt-% the weight percents being based on the total weight of the oxidative drying intaglio ink.

The oxidative drying intaglio inks described herein comprise one or more fusible waxes. Within the context of the present invention, one or more fusible waxes refer to waxes or mixtures of waxes having a melting temperature between about 50°C and about 120°C. The one or more fusible waxes are preferably selected from the group consisting of synthetic waxes, petroleum waxes and natural waxes. Preferably, the one or more waxes are selected from the group consisting of microcrystalline waxes, paraffin waxes, polyethylene waxes, fluorocarbon waxes, polytetrafluoroethylene waxes, Fischer-Tropsch waxes, silicone fluids, beeswaxes, candelilla waxes, montan waxes, carnauba waxes, rice bran waxes and mixtures thereof. The one or more waxes are present in a total amount from about 1 wt-% to about 10 wt-%, preferably from about 1.5 wt-% to 8 wt-% and more preferably from about 2 wt-% to 6 wt-%, the weight percents being based on the total weight of the oxidative drying intaglio ink.

Oxidative drying security inks dry by oxidation in the presence of oxygen, in particular in the presence of the oxygen of the atmosphere. During the drying process, the oxygen combines with one or more components of the ink, converting the ink to a solid state. The oxidative drying intaglio inks described herein comprise one or more driers (also referred in the art as catalysts, siccatives, siccative agents, desiccatives or dessicators) to speed up the oxidation process. Examples of driers include inorganic or organic salts of metal(s), metallic soaps of organic acids, metal complexes and metal complex salts. Suitable salts of metal(s) include salts containing cobalt, calcium, copper, zinc, iron, zirconium, manganese, barium, zinc, strontium, lithium, vanadium and potassium as the cation(s); and halides, nitrates, sulphates, carboxylates like acetates, ethylhexanoates, octanoates and naphtenates or acetoacetonates as the anion(s) such as for example ethylhexanoates of cobalt, manganese and zirconium. Suitable examples of metal complexes and metal complex salts include manganese, vanadium and iron compounds (i.e. manganese complexes, manganese complex salts, vanadium complexes, vanadium complex salts, iron complexes and iron complex salts). When present, the one or more driers used in the oxidative drying intaglio ink described herein are preferably present in a total amount from about 0.01 wt-% to about 10 wt-%, more preferably in a total amount from about 0.1 wt-% to about 5 wt-%, the weight percents being based on the total weight of the oxidative drying intaglio ink.

According to one embodiment, the oxidative drying intaglio inks described herein are white, transparent or slightly colored inks allowing the preparation of white, transparent or slightly colored security features. According to one embodiment, the oxidative drying intaglio inks described herein are white inks. According to one embodiment, the oxidative drying intaglio inks described herein are transparent inks. According to one embodiment, the oxidative drying intaglio inks described herein are slightly colored inks. Preferably said white, transparent or slightly colored inks comprise one or more driers selected from the group consisting of iron compounds, manganese compounds, zirconium compounds and mixtures thereof, wherein said compounds may be inorganic or organic salts of metal(s), metallic soaps of organic

acids, metal complexes and metal complex salts as described above.

The oxidative drying intaglio inks described herein may further comprise one or more fillers and/or extenders preferably selected from the group consisting of talcs, micas (e.g. muscovites), montmorillonites, bentonites, wollastonites, halloysites, calcined clays, china clays, carbonates (e.g. calcium carbonate, magnesium carbonate), silicates (e.g. magnesium silicate, aluminum silicate), vermiculites, amorphous silica (e.g. fumed silica, precipitated silica, silica flour), wood flours (sawdust), natural fibers, synthetic fibers (such as carbon fibers or carbon nanotubes) and mixtures thereof; preferably selected from the group consisting of talcs, micas, wollastonites, calcined clays, carbonates, amorphous silica and mixtures thereof.

When present, the one or more fillers or extenders are preferably present in a total amount from about 0.1 wt-% to about 50 wt-%, more preferably from about 20 wt-% to about 40 wt-%, the weight percents being based on the total weight of the oxidative drying intaglio ink.

The oxidative drying intaglio inks described herein may further comprise one or more surfactants, in particular hydrophilic macromolecular surfactants such as those described e.g. in EP 0 340 163 B1. The role of the optional surfactants is to help wiping off the excess of ink present on the printing cylinder just before contacting said printing cylinder with the substrate. This process of wiping off the excess of ink is part of any high-speed industrial intaglio printing process and is carried out using a tissue or a paper roll ("calico") or a polymer wiping cylinder and a cleansing water-based solution ("wiping solution"). In this case, the optional surfactants are used to emulsify the excess of ink in the cleansing solution. Said surfactants may be nonionic, anionic or cationic as well as zwitterionic ones. In the case of hydrophilic macromolecular surfactants, the functional groups are for example carboxylic or sulfonic acid groups, hydroxyl groups, ether groups or primary, secondary, tertiary or quaternary amino groups. The acid groups may be neutralized with amines, alcanolamines or preferably inorganic bases, or combinations thereof. Primary, secondary and tertiary amino groups may be neutralized with inorganic or organic acids such as sulfonic acids, formic acid, acetic acid, trifluoroacetic acid and others. Particularly preferred are anionic macromolecular surfactants (AMS), such as those described in EP 2 014 729 A1.

The oxidative drying intaglio inks described herein may be color constant inks or optically variable inks. In other words, the oxidative drying intaglio ink may further comprises one or more coloring components selected from the group consisting of optically variable pigments, color constant pigments, color constant dyes and mixtures thereof, preferably selected from the group consisting of color constant organic pigments, color constant inorganic pigments and mixtures thereof.

According to one aspect of the present invention, the oxidative drying intaglio inks described herein are color constant inks and may be white, transparent or slightly colored inks or may be colored inks. According to one embodiment, the oxidative drying intaglio inks described herein are color constant white inks. According to one embodiment, the oxidative drying intaglio inks described herein are color constant transparent inks. According to one embodiment, the oxidative drying intaglio inks described herein are color constant slightly colored inks. According to one embodiment, the oxidative drying intaglio inks described herein are color constant composition inks preferably comprising a) one or more dyes, and/or b) inorganic pigments, organic pigments or mixtures thereof. Dyes suitable for inks are known in the art and are preferably selected from the group comprising reactive dyes, direct dyes, anionic dyes, cationic dyes, acid dyes, basic dyes, food dyes, metal-complex dyes, solvent dyes and mixtures thereof. Typical examples of suitable dyes include without limitation coumarines, cyanines, oxazines, uranines, phtalocyanines, indolinocyanines, triphenylmethanes, naphtalocyanines, indonanaphtalo-metal dyes, anthraquinones, anthrapyridones, azo dyes, rhodamines, squarilium dyes, croconium dyes. Typical examples of dyes suitable for the present invention include without limitation C.I. Acid Yellow 1, 3, 5, 7, 11, 17, 19, 23, 25, 29, 36, 38, 40, 42, 44, 49, 54, 59, 61, 70, 72, 73, 75, 76, 78, 79, 98, 99, 110, 111, 121, 127, 131, 135, 142, 157, 162, 164, 165, 194, 204, 236, 245; C.I. Direct Yellow 1, 8, 11, 12, 24, 26, 27, 33, 39, 44, 50, 58, 85, 86, 87, 88, 89, 98, 106, 107, 110, 132, 142, 144; C.I. Basic Yellow 13, 28, 65; C.I. Reactive Yellow 1, 2, 3, 4, 6, 7, 11, 12, 13, 14, 15, 16, 17, 18, 22, 23, 24, 25, 26, 27, 37, 42; C.I. Food Yellow 3, 4; C.I. Acid Orange 1, 3, 7, 10, 20, 76, 142, 144; C.I. Basic Orange 1, 2, 59; C.I. Food Orange 2; C.I. Orange B; C.I. Acid Red 1, 4, 6, 8, 9, 13, 14, 18, 26, 27, 32, 35, 37, 42, 51, 52, 57, 73, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 221, 249, 252, 254, 262, 265, 274, 282, 289, 303, 317, 320, 321, 322, 357, 359; C.I. Basic Red 1, 2, 14, 28; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, 231, 253; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, 108, 180; C.I. Food Red 1, 7, 9, 14; C.I. Acid Blue 1, 7, 9, 15, 20, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 193, 199, 203, 204, 205, 229, 234, 236, 249, 254, 285; C.I. Basic Blue 1, 3, 5, 7, 8, 9, 11, 55, 81; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, 46, 77; C.I. Food Blue 1, 2; C.I. Acid Green 1, 3, 5, 16, 26, 104; C.I. Basic Green 1, 4; C.I: Food Green 3; C.I. Acid Violet 9, 17, 90, 102, 121; C.I. Basic Violet 2, 3, 10, 11, 21; C.I. Acid Brown 101, 103, 165, 266, 268, 355, 357,

365, 384; C.I. Basic Brown 1; C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, 191, 194; C.I. Direct Black 17, 19, 22, 32, 39, 51, 56, 62, 71, 74, 77, 94, 105, 106, 107, 108, 112, 113, 117, 118, 132, 133, 146, 154, 168; C.I. Reactive Black 1, 3, 4, 5, 6, 8, 9, 10, 12, 13, 14, 18, 31; C.I. Food Black 2; C.I. Solvent Yellow 19, C.I. Solvent Orange 45, C.I. Solvent Red 8, C.I. Solvent Green 7, C.I. Solvent Blue 7, C.I. Solvent Black 7; C.I. Disperse Yellow 3, C.I. Disperse Red 4, 60, C.I. Disperse Blue 3, and metal azo dyes disclosed in US 5,074,914, US 5,997,622, US 6,001,161, JP 02-080470, JP 62-190272, JP 63-218766. Suitable dyes for the present invention may be infrared absorbing dyes or luminescent dyes. When present, the one or more dyes used in the oxidative drying intaglio ink described herein are preferably present in a total amount from about 1 wt-%, to about 20 wt-%, the weight percents being based on the total weight of the oxidative drying intaglio ink.

Typical examples of organic and inorganic pigments include without limitation C.I. Pigment Yellow 12, C.I. Pigment Yellow 42, C.I. Pigment Yellow 93, C.I. Pigment 109, C.I. Pigment Yellow 110, C.I. Pigment Yellow 147, C.I. Pigment Yellow 173, C.I. Pigment Orange 34, C.I. Pigment Orange 48, C.I. Pigment Orange 49, C.I. Pigment Orange 61, C.I. Pigment Orange 71, C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Brown 6, C.I. Pigment Brown 7, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, Pigment Black 31, Pigment Black 32, C. I. Pigment White 4, C.I Pigment White 6, C.I. Pigment White 7, C.I. Pigment White 21, C. I. Pigment White 22, antimony yellow, lead chromate, lead chromate sulfate, lead molybdate, ultramarine blue, cobalt blue, manganese blue, chrome oxide green, hydrated chrome oxide green, cobalt green, cerium sulfide, cadmium sulfide, cadmium sulfoselenides, zinc ferrite, bismuth vanadate, Prussian blue, mixed metal oxides, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments. When present, the inorganic pigments, organic pigments or mixtures thereof described herein are preferably present in a total amount from about 0.1 wt-% to about 45 wt-%, the weight percents being based on the total weight of the oxidative drying intaglio ink.

For embodiments wherein the oxidative drying intaglio inks described herein are transparent inks, said inks typically do not comprise any pigments such as those described herein. For embodiments wherein the oxidative drying intaglio inks described herein are white or slightly colored inks, said inks comprise one or more pigments preferably selected from the group consisting of C.I. Pigment White 4, C.I Pigment White 6, C.I. Pigment White 7, C.I. Pigment White 21 and C. I. Pigment White 22.

According to one aspect of the present invention, the oxidative drying intaglio inks described herein are optically variable inks and comprise optically variable pigments or a mixture of different optically variable pigments. Optically variable inks may further comprise one or more color constant pigments. Optically variable inks preferably comprise optically variable pigments or a mixture of different optically variable pigments, wherein the optically variable pigments are preferably selected from the group consisting of thin film interference pigments, interference coated pigments, cholesteric liquid crystal pigments and mixtures thereof. When present, the optically variable pigments are preferably comprised in the oxidative drying intaglio ink described herein in a total amount between about 5 wt-% and about 40 wt-% and more preferably in a total amount between about 10 wt-% and about 35 wt-%, the weight percents being based on the total weight of the oxidative drying intaglio ink.

Suitable thin film interference pigments exhibiting optically variable characteristics are known to those skilled in the art and disclosed in US 4,705,300; US 4,705,356; US 4,721,271; US 5,084,351; US 5,214,530; US 5,281,480; US 5,383,995; US 5,569,535, US 5,571624 and in the thereto related documents. When at least a part of the optically variable pigments consists of thin film interference pigments, it is preferred that the thin film interference pigments comprise a Fabry-Perot reflector/dielectric/absorber multilayer structure and more preferably a Fabry-Perot absorber/dielectric/reflector/dielectric/absorber multilayer structure, wherein the absorber layers are partially transmitting and partially reflecting, the dielectric layers are transmitting and the reflective layer is reflecting the incoming light. Preferably, the reflector layer is selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently selected from the group consisting of magnesium fluoride ($MgF_2$), silicium dioxide ($SiO_2$) and mixtures thereof and more preferably magnesium fluoride ($MgF_2$). Preferably, the absorber layers are independently selected from the group consisting of chromium (Cr), nickel (Ni), metallic alloys and mixtures thereof and more preferably chromium (Cr). When at least a part of the optically variable pigments consists of thin film interference pigments, it is particularly preferred that the thin film interference pigments comprise a Fabry-Perot absorber/dielectric/reflector/dielectric/absorber multilayer structure consisting of a $Cr/MgF_2/Al/MgF_2/Cr$ multilayer structure.

Thin film interference pigments described herein are typically manufactured by vacuum deposition of the different required layers onto a web. After deposition of the desired number of layers, the stack of layers is removed from the web, either by dissolving a release layer in a suitable solvent, or by stripping the material from the web. The so-obtained material is then broken down to flakes which have to be further processed by grinding, milling or any suitable method. The resulting product consists of flat flakes with broken edges, irregular shapes and different aspect ratios.

Suitable interference coated pigments include without limitation structures consisting of a substrate selected from the group consisting of metallic cores such as titanium, silver, aluminum, copper, chromium, iron, germanium, molybdenum, tantalum or nickel coated with one or more layers made of metal oxides as well as structure consisting of a core made of synthetic or natural micas, other layered silicates (e.g. talc, kaolin and sericite), glasses (e.g. borosilicates), silicium dioxides ($SiO_2$), aluminum oxides ($Al_2O_3$), aluminum oxides/hydroxides (boehmite), titanium oxides ($TiO_2$), graphites and mixtures thereof coated with one or more layers made of metal oxides (e.g. titanium oxide, zirconium oxide, tin oxide, chromium oxide, nickel oxide, copper oxide, iron oxide and iron oxide/hydroxide). The structures described hereabove have been described for example in Chem. Rev. 99 (1999), G. Pfaff and P. Reynders, pages 1963-1981 and WO 2008/083894 A2. Typical examples of these interference coated pigments include without limitation silicium oxide cores coated with one or more layers made of titanium oxide, tin oxide and/or iron oxide; natural or synthetic mica cores coated with one or more layers made of titanium oxide, silicium oxide and/or iron oxide, in particular mica cores coated with alternate layers made of silicium oxide and titanium oxide; borosilicate cores coated with one or more layers made of titanium oxide, silicium oxide and/or tin oxide; and titanium oxide cores coated with one or more layers made of iron oxide, iron oxide/hydroxide, chromium oxide, copper oxide, cerium oxide, aluminum oxide, silicium oxide, bismuth vanadate, nickel titanate, cobalt titanate and/or antimony-doped, fluorine-doped or indium-doped tin oxide; aluminum oxide cores coated with one or more layers made of titanium oxide and/or iron oxide.

Liquid crystals in the cholesteric phase exhibit a molecular order in the form of a helical superstructure perpendicular to the longitudinal axes of its molecules. The helical superstructure is at the origin of a periodic refractive index modulation throughout the liquid crystal material, which in turn results in a selective transmission / reflection of determined wavelengths of light (interference filter effect). Cholesteric liquid crystal polymers can be obtained by subjecting one or more crosslinkable substances (nematic compounds) with a chiral phase to alignment and orientation. The particular situation of the helical molecular arrangement leads to cholesteric liquid crystal materials exhibiting the property of reflecting a circularly polarized light component within a determined wavelength range. The pitch can be tuned in particular by varying selectable factors including the temperature and solvents concentration, by changing the nature of the chiral component(s) and the ratio of nematic and chiral compounds. Crosslinking under the influence of UV radiation freezes the pitch in a predetermined state by fixing the desired helical form so that the color of the resulting cholesteric liquid crystal materials is no longer depending on external factors such as the temperature. Cholesteric liquid crystal materials may then be shaped to cholesteric liquid crystal pigments by subsequently comminuting the polymer to the desired particle size. Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1.

The oxidative drying intaglio inks described herein may further comprise one or more machine readable components preferably selected from the group consisting of magnetic materials, luminescent materials, electrically conductive materials, infrared-absorbing materials and mixtures thereof.

The oxidative drying intaglio inks described herein may further comprise one or more forensic markers and/or one or more taggants.

The oxidative drying intaglio inks described herein may further comprise one or more additives including without limitation compounds and materials which are used for adjusting physical, rheological and chemical parameters of the composition such as the viscosity, the consistency (e.g. anti-settling agents and plasticizers), the foaming properties (e.g. antifoaming agents and deaerators), UV stability (photostabilizers), adhesion properties, *etc.* Additives described herein may be present in the oxidative drying intaglio inks disclosed herein in amounts and in forms known in the art, including in the form of so-called nano-materials where at least one of the dimensions of the particles is in the range of 1 to 1000 nm.

The intaglio printing processes described herein allows the production of security features onto the substrate described herein. The substrates described herein are preferably selected from the group consisting of papers or other fibrous materials (including woven and non-woven fibrous materials), such as cellulose, paper-containing materials, glasses, metals, ceramics, plastics and polymers, metallized plastics or polymers, composite materials and mixtures or combinations of two or more thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote value documents. Typical examples of plastics and polymers include polyolefins such as polyethylene (PE) and polypropylene (PP) including biaxially oriented polypropylene (BOPP), polyamides (PA), polyesters such as poly(ethylene terephthalate) (PET), polyethylene terephthalate glycol-modified (PETG) including poly(ethylene glycol-co-1,4-cyclohexanedimethanol terephthalate), poly(1,4-butylene terephthalate) (PBT), poly(ethylene 2,6-naphthoate) (PEN) and polyvinylchlorides

(PVC). Spunbond olefin fibers such as those sold under the trademark Tyvek® may also be used as substrate. Typical examples of metalized plastics or polymers include the plastic or polymer materials described hereabove having a metal disposed continuously or discontinuously on their surface. Typical example of metals include without limitation aluminum (Al), chromium (Cr), copper (Cu), gold (Au), silver (Ag), alloys thereof and combinations of two or more of the aforementioned metals. The metallization of the plastic or polymer materials described hereabove may be done by an electrodeposition process, a high-vacuum coating process or by a sputtering process. Typical examples of composite materials include without limitation multilayer structures or laminates of paper and at least one plastic or polymer material such as those described hereabove as well as plastic and/or polymer fibers incorporated in a paper-like or fibrous material such as those described hereabove. Of course, the substrate can comprise further additives that are known to the skilled person, such as fillers, sizing agents, whiteners, processing aids, reinforcing or wet strengthening agents, etc. With the aim of further increasing the security level and the resistance against counterfeiting and illegal reproduction of value documents, the substrate may contain watermarks, security threads, fibers, planchettes, luminescent compounds, windows, foils, decals, coatings and combinations thereof.

Also described herein are processes for producing the oxidative drying intaglio inks described herein and oxidative drying intaglio inks described herein obtained therefrom. The oxidative drying intaglio inks described herein may be prepared by mixing all the ingredients except the one or more driers and dispersing or grinding them using for example a three roll mill and subsequently adding and mixing the one or more driers. Alternatively, the oxidative drying intaglio inks described herein described herein may be prepared by mixing all the ingredients except the one or more polythiol compounds and except the one or more driers and dispersing or grinding them using for example a three roll mill, subsequently adding and mixing the one or more polythiol compounds and subsequently adding and mixing the one or more driers.

Also described herein are security features made of the oxidative drying intaglio ink described herein and made with the process described herein. Also described herein are uses of the security features described herein for the protection of a value document against fraud or illegal reproduction.

Also described herein are value documents comprising one or more security features made of the oxidative drying intaglio ink described herein such as those described herein. Preferably, the value document is selected from banknotes, deeds, tickets, checks, vouchers, fiscal stamps, agreements, identity documents such as passports, identity cards, visas, driving licenses, bank cards, credit cards, transactions cards, access documents, and cards, entrance tickets, public transportation tickets, academic diploma, and academic titles. More preferably the value document is a banknote.

The security document described herein may further comprise one or more additional layers or coatings either below or on top of the security feature made of the oxidative drying intaglio ink described herein. Should the adhesion between the substrate and the security feature described herein be insufficient, for example, due to the substrate material, a surface unevenness or a surface inhomogeneity, an additional layer, coating or a primer between the substrate and the security feature might be applied as known for those skilled in the art.

With the aim of increasing the durability through resistance against soiling or chemicals and the cleanliness and thus the circulation lifetime of security documents, one or more protective layers may be applied on top of the one or more security features described herein. When present, the one or more protective layers are typically made of protective varnishes which may be transparent or slightly colored or tinted and may be more or less glossy. Protective varnishes may be radiation curable compositions, thermal drying compositions or any combination thereof. Preferably, the one or more protective layers are made of radiation curable, more preferably UV-Vis curable compositions.

## EXAMPLES

The present invention is now described in more details with reference to nonlimiting examples. The Examples below provide more details for the preparation and use of oxidative drying intaglio inks for printing a security feature on a substrate by an intaglio printing process. In particular, the process examples E1-E22 according to the present invention and comparative process examples C1-C27 described thereafter provide more details about the preparation of security feature, the drying properties and the color properties of the printed samples obtained by the processes described herein.

Comparative examples C28-C39 were prepared according to a comparative offset process using oxidative drying offset inks described in Table 10.

### A. Preparation of oxidative drying intaglio inks

The oxidative drying intaglio inks (I1-I23, Table 4) used to prepare the printed samples (E1-E18 and C1-C23, Table 6) were prepared by using four compositions: a black pigment paste (PP), a transparent white composition (TW, Table 1), a mixture of driers (D, Table 2) and a polythiol compound (TH, Table 3). When present, the fusible wax (W1-W4) was added during the production of the transparent white compositions (TW1-TW4) as described in Table 1. When

present, the polythiol compound (TH1-TH3) was added to the dispersed mixture of the transparent white compositions (TW0-TW4) and the black pigment paste (PP), before the addition of the mixture of the driers (D1-D4), so as to generate the final intaglio inks (I1-I23) as described in Table 4.

Examples (E1-E14, Table 6) were prepared according to the process of the present invention and using inks comprising one or more fusible waxes and one or more polythiol compounds in the required amount. Comparative examples C1, C5, C9 and C13-C15 were prepared according to a comparative process and using inks comprising one or more fusible waxes and one or more polythiol compounds. Comparative examples C2-C4, C6-C8, C10-C12 and C16-C19 were prepared according to the process of the present invention but using inks lacking either one or more fusible waxes or one or more polythiol compounds in the required amount, or both.

Examples (E15-E18, Table 6) were prepared according to the process of the present invention and using inks comprising one or more fusible waxes and one or more polythiol compounds in the required amount. Comparative examples C20-C23 were prepared according to a comparative process and using inks comprising one or more fusible waxes but lacking one or more polythiol compounds in the required amount.

The oxidative drying intaglio inks (I24-I31, see Table 8) used to prepare the printed samples (E19-E22 and C24-C27) were prepared by using three compositions: an ink premix (IP, Table 7), a mixture of driers (D, Table 2) and a polythiol compound (TH, Table 3). When present, the polythiol compound (TH1) was added to the ink premixes (IP1-IP2), before the addition of the mixture of the driers (D1-D2), so as to generate the final intaglio inks (I24-I31) as described in Table 8.

Examples (E19-E22, Table 9) were prepared according to the process of the present invention and using inks comprising one or more fusible waxes and one or more polythiol compounds in the required amount. Comparative examples C24-C27 were prepared according to a comparative process and using inks comprising one or more fusible waxes but lacking one or more polythiol compounds in the required amount.

**Black pigment paste (PP) comprising:**

**39.1 wt-% of a urethane alkyd resin** consisting of Urakyd AL210 Q55 from Synres (polyurethane modified long-oil alkyd resin based on soybean oil)

**18.4 wt-% of a phenolic resin** consisting of 42.4 wt-% phenolic modified rosin ester (Bremapal 2035, Kraemer) cooked in 42.4 % tung oil (Interfat, CAS No 8001-20-5), then diluted with 15.2 wt-% n-dodecane (Halterman, CAS No 112-40-3)

**13.8 wt-% of CI Pigment Black 7** consisting of Special Black 4A from Orion (CAS No 1333-86-4)

**28.7 wt-% of an inorganic filler** consisting of Omyalite® 50 from Omya (limestone, CAS No 1317-65-3, particle size $d_{50}$ < 2 microns), wherein

said ingredients were first weighted and mixed together at room temperature using a SpeedMixer® (DAC 150 SP from Hauschild Engineering) for 3 minutes at 2500 rpm; subsequently, a step of grinding was carried out on a Bühler SDY three-roll mill in three passes with a pressure of 5, 11 and 11 bars, respectively so at to produce the black pigment paste (PP).

**Table 1**

| Ingredients | [wt-%] | | | | |
|---|---|---|---|---|---|
| | **TW0** | **TW1** | **TW2** | **TW3** | **TW4** |
| **Partially neutralized acidified polyester**<br>Condensation product of conjugated sunflower oil fatty acids (32.8 wt-%, A. Smit Trading, CAS No 68953-27-5), isophthalic acid (13.1 wt-%, Penpet, CAS No 121-91-5), tetrahydrophthalic anhydride (12.8 wt-%, Polynt, CAS No 85-43-8), trimethylolpropane (8.6 No wt-%, Sikem, CAS No 77-99-6) and pentaerythritol (7.4 wt-%, Penpet, CAS No 117-77-5) neutralized with potassium hydroxide 40 wt-% solution (6.2 wt-%, CAS No 1310-58-3)<br>Dodecyl benzenesulfonic acid salt of 2-amino-propane (19.1 wt-%, Zephrym™ 3300B, Croda, CAS No 84961-74-0) | 29.57 | 27.07 | 27.07 | 27.07 | 27.07 |
| **Fusible wax-1** (W1) carnauba wax (A. Smit Trading AG), melting T: 80°C | | 8.46 | | | |
| **Fusible wax-2** (W2) rice bran wax E00130 (Keuster Keunen) melting T: 77-82°C | | | 8.46 | | |
| **Fusible wax-3** (W3) paraffin Sawolwax 5203 (Sasol), melting T: 52-54°C | | | | 8.46 | |

(continued)

| Ingredients | [wt-%] | | | | |
|---|---|---|---|---|---|
| | **TW0** | **TW1** | **TW2** | **TW3** | **TW4** |
| **Fusible wax-4** (W4) paraffin S-394 N1 (Shamrock), melting T: 113°C | | | | | 8.46 |
| **Mineral oil,** C14-C18 hydrocarbons PKWF 6/9 AF (Haltermann) | 5.55 | 5.08 | 5.08 | 5.08 | 5.08 |
| **Inorganic filler:** Luzenac talc (Imerys)<br>mixture of 50 wt-% talc (CAS No 14807-96-6), 47-wt-% chlorite-group minerals (CAS No 1318-59-8), 2 wt-% dolomite (CAS No16389-88-1) and 1 wt-% silica (CAS No 14808-60-7) | 3.88 | 3.55 | 3.55 | 3.55 | 3.55 |
| **Inorganic filler:** Omyalite® 50 (Omya)<br>limestone, CAS No 1317-65-3, particle size $d_{50}$ < 2 microns | 61.00 | 55.84 | 55.84 | 55.84 | 55.84 |

The transparent white compositions (TW0-TW4) were prepared by first weighting the ingredients and mixing them together using a SpeedMixer® (DAC 150 SP from Hauschild Engineering) (3 minutes at 2500 rpm), then grinding on a Bühler SDY three-roll mill in three passes with respective pressure of 5, 11 and 11 bars.

**Table 2**

| Ingredients | | [wt-%] | | | |
|---|---|---|---|---|---|
| | | **D1** | **D2** | **D3** | **D4** |
| drier | 2-ethylhexanoic acid, manganese salt (Octa-Soligen® manganese oil, 8 wt-% Mn, 50 wt-% CAS No 15956-58-8 + 50 wt-% CAS No 927-632-8) | 40.0 | 35.0 | 28.6 | 42.8 |
| drier | 2-ethylhexanoic acid, zirconium salt (Octa-Soligen® zirconium oil, 18 wt-% Zr, 55 wt-% CAS No 22464-99-9 + 45 wt-% CAS No 918-481-9) | 48.0 | 48.3 | 57.2 | 57.2 |
| drier | 2-ethylhexanoic acid, cobalt salt (Octa-Soligen® cobalt oil, 12 wt-% Co, 75 wt-% CAS No 136-52-7 + 25 wt-% CAS No 927-632-8) | 5.2 | - | - | - |
| drier | Iron(I)-complex (Borchers® SA2117, 1.75 wt-% CAS No 478945-46-9 + 98.25 wt-% CAS No 57-55-6) | - | 16.7 | - | - |
| drier | Vanadium complex (Borchers® VP9950, 6.45-6.85 wt-% V, CAS No not provided) | - | - | 14.2 | - |
| solvent | 2-(2-ethoxyethoxy)ethanol (Brenntag, CAS No 111-90-0) | 6.8 | - | - | - |
| Metal content in wt-% | | | | | |
| Mn | | 3.20 | 2.80 | 2.29 | 3.42 |
| Zr | | 8.64 | 8.69 | 10.30 | 10.30 |
| Co | | 0.62 | - | - | - |
| Fe | | - | 0.025 | - | - |
| V | | - | - | 0.94 | - |

**Table 3**

| | |
|---|---|
| **TH1,** pentaerythritol tetra(3-mercaptopropionate) (CAS No 7575-23-7, BRUNO BOCK Chemische Fabrik GmbH & Co. KG) THIOCURE® 340 | 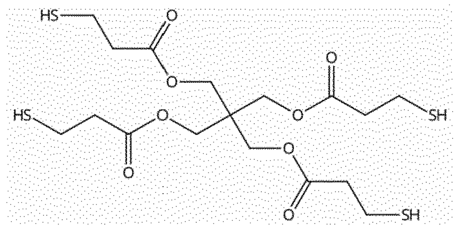 |
| **TH2,** tris[2-(3-mercaptopropionyloxy)ethyl]isocyanurate (CAS No 36196-44-8, BRUNO BOCK Chemische Fabrik GmbH & Co. KG) THIOCURE® TEMPIC | 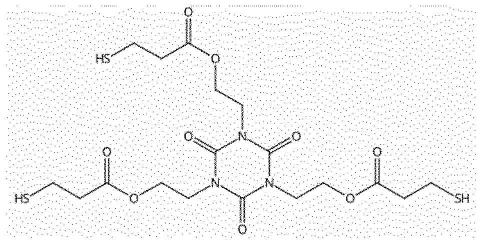 |
| **TH3,** ethylene gylcol bis(3-mercaptopropionate) (CAS No 22504-50-3, BRUNO BOCK Chemische Fabrik GmbH & Co. KG) THIOCURE® GDMP | 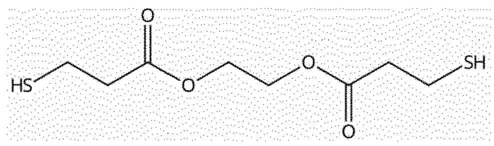 |

**Table 4**

| | Black pigment paste wt-% | White transparent composition wt-% | | | | | Polythiol compound wt-% | | | Mixture of driers wt-% | | | | Viscosity Pas |
|---|---|---|---|---|---|---|---|---|---|---|---|---|---|---|
| | **PP** | **TW0** | **TW1** | **TW2** | **TW3** | **TW4** | **TH1** | **TH2** | **TH3** | **D1** | **D2** | **D3** | **D4** | |
| **I1** | 43.46 | 54.04 | | | | | | | | 2.5 | | | | 9.7 |
| **I2** | 43.46 | | 54.04 | | | | | | | 2.5 | | | | 14.8 |
| **I3** | 42.79 | 53.21 | | | | | 1.5 | | | 2.5 | | | | 11.6 |
| **I4** | 42.79 | | 53.21 | | | | 1.5 | | | 2.5 | | | | 14.0 |
| **I5** | 42.79 | | 53.21 | | | | | 1.5 | | 2.5 | | | | 14.2 |
| **I6** | 42.79 | | 53.21 | | | | | | 1.5 | 2.5 | | | | 10.7 |
| **I7** | 43.24 | | 53.76 | | | | 0.5 | | | 2.5 | | | | 13.2 |
| **I8** | 43.01 | | 53.49 | | | | 1.0 | | | 2.5 | | | | 13.7 |
| **I9** | 42.57 | | 52.93 | | | | 2.0 | | | 2.5 | | | | 14.1 |
| **I10** | 43.46 | | | 54.04 | | | | | | 2.5 | | | | 17.9 |
| **I11** | 42.79 | | | 53.21 | | | 1.5 | | | 2.5 | | | | 18.6 |
| **I12** | 43.46 | | | | 54.04 | | | | | 2.5 | | | | 6.1 |
| **I13** | 42.79 | | | | 53.21 | | 1.5 | | | 2.5 | | | | 7.7 |
| **I14** | 43.46 | | | | | 54.04 | | | | 2.5 | | | | 18.3 |
| **I15** | 42.79 | | | | | 53.21 | 1.5 | | | 2.5 | | | | 19.8 |
| **I16** | 43.01 | | 53.49 | | | | | | | 3.5 | | | | 11.1 |
| **I17** | 42.56 | | 52.94 | | | | 1.0 | | | 3.5 | | | | 13.5 |
| **I18** | 43.01 | | 53.49 | | | | | | | | 3.5 | | | 10.6 |
| **I19** | 42.56 | | 52.94 | | | | 1.0 | | | | 3.5 | | | 10.5 |

(continued)

| | Black pigment paste wt-% | White transparent composition wt-% | | | | | Polythiol compound wt-% | | | Mixture of driers wt-% | | | | Viscosity Pas |
|---|---|---|---|---|---|---|---|---|---|---|---|---|---|---|
| | **PP** | **TW0** | **TW1** | **TW2** | **TW3** | **TW4** | **TH1** | **TH2** | **TH3** | **D1** | **D2** | **D3** | **D4** | |
| **I20** | 43.01 | | 53.49 | | | | | | | | | 3.5 | | 10.9 |
| **I21** | 42.56 | | 52.94 | | | | 1.0 | | | | | 3.5 | | 13.1 |
| **I22** | 43.01 | | 53.49 | | | | | | | | | | 3.5 | 11.6 |
| **I23** | 42.56 | | 52.94 | | | | 1.0 | | | | | | 3.5 | 12.9 |

The dark oxidative drying intaglio inks (11-123) described in Table 4 were prepared according to the following steps:

- the black pigment paste (PP), the respective transparent white compositions (TW0-TW4) and the polythiol compound (TH1-TH3), when present, were independently weighted and mixed using a SpeedMixer® (DAC 150 SP from Hauschild Engineering) at room temperature for 90 seconds at 2500 rpm, and
- the mixtures of the driers (D1-D4) were independently added to the dispersed pastes obtained in the previous step and further mixed with the SpeedMixer® (DAC 150 SP from Hauschild Engineering) for 3 minutes at 2500 rpm.

The viscosity of the dark oxidative drying intaglio inks (I1-I23) was independently measured using a Haake Roto Visco RV1 rotational rheometer, using a cone plate of 20 mm diameter and a 0.5° geometry, at a shear rate of 1000 $s^{-1}$ and a temperature of 40°C.

**B. Preparation of intaglio printed samples (E1-E18 and C1-C23) and set-off characteristics (Tables 6A-6D)**

The so-obtained dark oxidative drying intaglio inks (I1-I23) were independently applied by hand using an Ormag intaglio proof-press. An intaglio engraved printing plate was used to prepare the intaglio printed samples (E1-E18 and C1-C23), wherein said plate comprised a set of "U"-shaped engravings of various depths (from about 20 $\mu$m to about 100 $\mu$m) and widths (from about 60 $\mu$m to about 500 $\mu$m) such as to mimic an intaglio printed feature on a banknote.

The intaglio engraved printing plate was independently inked with each of the dark oxidative drying intaglio ink using a polymer hand-roller (step a)), wherein said plate had a printing plate temperature between 35°C and 80°C, as indicated in Tables 6A-6D.

Subsequently to the step a), the excess of said inks was manually wiped off from the printing plate with paper, leaving ink only in the engravings (step b)).

Subsequently to the step b), the dark oxidative drying intaglio inks were independently applied (step c)) in the form of a security feature on a blank sheet of cotton fiduciary paper (Louisenthal).

Subsequently to the step c), the applied inks were independently dried in the presence of air so as to form the security feature (step d)).

The total residence time of the ink (including inking, wiping off the excess of ink and ink transferring) was about 15 seconds. While the dark oxidative drying intaglio inks have been exposed for about 15 seconds to the intaglio engraved printing plate to prepare the samples (E1-E18 and C1-C23) with an intaglio laboratory press, industrial processes are much shorter and typically involve an exposure of the oxidative drying intaglio inks to the intaglio engraved printing plate for a time which is typically less than one second.

For each intaglio printed sample, six samples were printed.

Immediately after the printing process, the printed substrates were stacked to form a pile with an interleaved blank sheet between said substrates. The pile was placed between two glass plates and was kept 24 hours at 22°C and 50% RH (relative humidity) under 3 kg pressure to mimic a pile of 1500 printed substrates. The printed substrates were then removed from the pile and the blank sheet corresponding to each printed substrate was assessed in terms of set-off characteristics according to the following procedure:

i. a series of blank sheets obtained in the same way and corresponding to different levels of set-off was sorted out by a person skilled in the art to design a visual scale having values between 1 and 12, wherein "1" corresponds to the maximal set-off (*i.e.* all intaglio lines were reported on the blank sheet) and "12" corresponds to the minimal set-off (*i.e.* almost no ink was transferred to the blank sheet), one sample corresponding to one value of the visual scale;

ii. the same series of blank sheets was analyzed at the pixel level to provide a correlation curve between the values of the

visual scale and the number of transferred pixels due to set-off. Each sample was scanned using an Epson Perfection V500 scanner at 600 dpi to get a picture that was analyzed with Photoshop CC. The absolute number of transferred pixels was determined using the histogram and expressed as the percentage of transferred pixels compared to the sample having "1" as visual scale value, i.e. the sample exhibiting the maximal set-off;

iii. a graph shown in Figure 1 was established with the percentage of transferred pixels (relative scale obtained in ii.) on the x-axis and the visual scale on the y-axis (circular dots). A regression curve (dashed line) having the following equation was established from the experimental data displayed in Figure 1:

$$\text{transferred pixels (interpolated)} = 2.295 * 10^{-0.2189 * \text{(visual value)}} \quad (R^2 = 0.9887)$$

iv. According to the equation, the number of transferred pixels significantly decreases (about 40%) for each additional value of the visual scale. Table 5 displays the visual value, the absolute number of transferred pixels, the percentage of transferred pixels as determined in b) and the interpolated value obtained from the equation of the regression curve in iii.;

**Table 5**

| Visual scale | Transferred pixels (absolute value) | Transferred pixels (relative value) | Interpolated percentage of transferred pixels |
|---|---|---|---|
| 1 | 289657 | 100.0 % | n/a* |
| 2 | 259658 | 89.6 % | n/a |
| 3 | 195038 | 67.3% | n/a |
| 4 | 103328 | 35.7 % | n/a |
| 5 | 57417 | 19.8 % | 18.5 % |
| 6 | 29936 | 10.3 % | 11.2 % |
| 7 | 20128 | 6.9 % | 6.7 % |
| 8 | 11204 | 3.9 % | 4.1% |
| 9 | 6446 | 2.2 % | 2.5 % |
| 10 | 3280 | 1.1 % | 1.5 % |
| 11 | 2355 | 0.8 % | 0.9 % |
| 12 | 2116 | 0.7% | 0.5 % |

* interpolated percentages of transferred pixels are indicated as "n/a" for visual scale values smaller than 5 due to the discrepancy between the actually transferred pixels and the calculated ones at high set-off (regression curve of Figure 1)

v. the blank sheets corresponding to each series of six printed samples (E1-E18 and C1-C23), were independently assessed by comparing them with the samples of the visual scale described in i. The values provided in Tables 6A-D correspond to an average of six visual values, one for each printed sample. The number of transferred pixels was interpolated from the average visual value according to the equation displayed in iii.

A "6" as visual value corresponds to about 11 % of transferred pixels and indicates an industrially acceptable set-off value for the printed intaglio samples.

Set-off characteristics are provided in Tables 6A-D, wherein set-off values are indicated as visual values comprised between 1 and 12, transferred pixels (as estimated in ii.) and interpolated percentage of transferred pixels (using the equation in iii.).

The determination of the set-off characteristics was rendered easy since the oxidative drying intaglio inks (11-123) were dark and the contrast between the blank sheets and the transferred pixels was high (both visually and using the scanner).

An appreciation of set-off has been made on the basis of the visual values and the interpolated transferred pixels:

- *very low*: a combination of a visual value larger than 8 with an interpolated percentage of transferred pixels smaller than 5%
- *low*: a combination of a visual value between 7 and 8 with an interpolated percentage of transferred pixels between 5% and 7%
- *acceptable*: a combination of a visual value between 6 and 7 with an interpolated percentage of transferred pixels

between 7% and 11%
- *unacceptable*: a combination of a visual value smaller than 6 with an interpolated percentage larger than 11%.

**Table 6A**

| | Ink | T of the intaglio engraved printing plate | Set-off | | |
|---|---|---|---|---|---|
| | | | visual value | transferred pixels | appreciation of set-off |
| **C1** | **I1** no wax no polythiol compound | 35°C | 1 | n/a | unacceptable |
| **C2** | | 50°C | 1 | n/a | unacceptable |
| **C3** | | 65°C | 1.4 | n/a | unacceptable |
| **C4** | | 85°C | 1.7 | n/a | unacceptable |
| **C5** | **I2** wax W1 no polythiol compound | 35°C | 2.1 | n/a | unacceptable |
| **C6** | | 50°C | 2.4 | n/a | unacceptable |
| **C7** | | 65°C | 3.4 | n/a | unacceptable |
| **C8** | | 85°C | 5.5 | 14.4% | unacceptable |
| **C9** | **I3** no wax TH1 | 35°C | 1.8 | n/a | unacceptable |
| **C10** | | 50°C | 4.6 | n/a | unacceptable |
| **C11** | | 65°C | 4.8 | n/a | unacceptable |
| **C12** | | 85°C | 5.8 | 12.3% | unacceptable |
| **C13** | **I4** wax W1 TH1 | 35°C | 4.3 | n/a | unacceptable |
| **E1** | | 50°C | 6.1 | 10.6% | acceptable |
| **E2** | | 65°C | 7.0 | 6.7% | low |
| **E3** | | 85°C | 10.6 | 1.1% | very low |
| **C14** | **I5** wax W1 TH2 | 35°C | 5.1 | 17.6% | unacceptable |
| **E4** | | 50°C | 6.1 | 10.6% | acceptable |
| **E5** | | 65°C | 7.0 | 6.7% | low |
| **E6** | | 85°C | 10.3 | 1.3% | very low |
| **C15** | **I6** wax W1 TH3 | 35°C | 4.8 | n/a | unacceptable |
| **E7** | | 50°C | 6.3 | 9.6% | acceptable |
| **E8** | | 65°C | 7.4 | 5.5% | low |
| **E9** | | 85°C | 10.1 | 1.4% | very low |

As shown in Table 6A, intaglio printed samples (C1-C15) obtained according to a process different from the present invention, i.e. a process using an intaglio engraved printing plate heated at a printing plate temperature lower than 45° or a process using an oxidative drying intaglio ink lacking one or more fusible waxes, or a process using an oxidative drying intaglio ink lacking polythiol compounds, or a process using an oxidative drying intaglio ink lacking the one or more waxes and lacking the one or more polythiol compounds, exhibited unacceptable set-off characteristics and are thus unsuitable to be used for high-end applications (such as the preparation of security documents).

Contrary to the comparative examples, the intaglio printed samples (E1-E9) obtained with the process according to the present invention, i.e. a process i) using an intaglio engraved printing plate heated at a printing plate temperature between about 45°C and about 85°C, preferably between 50°C and 80°C, and ii) using an oxidative drying intaglio ink comprising one or more fusible waxes and one or more polythiol compounds in a total amount larger than 0.5 wt-%, preferably between about 0.75 wt-% and about 2.0 wt-%, exhibited acceptable to very low set-off, making them suitable for high-end printing applications.

**Table 6B**

| | Ink | T of the intaglio engraved printing plate | Set-off | | |
|---|---|---|---|---|---|
| | | | visual value | transferred pixels | appreciation of set-off |
| **C7** | **I2**<br>W1<br>no TH | 65°C | 3.4 | n/a | unacceptable |
| **C16** | **I7**<br>W1<br>TH1 (0.5 wt-%) | 65°C | 5.1 | 17.6% | unacceptable |
| **E10** | **I8**<br>W1<br>TH1 (1.0 wt-%) | 65°C | 6.6 | 8.2% | acceptable |
| **E2** | **I4**<br>W1<br>TH1 (1.5 wt-%) | 65°C | 7.0 | 6.7% | low |
| **E11** | **I9**<br>W1<br>TH1 (2.0 wt-%) | 65°C | 7.9 | 4.3% | low |

As shown in Table 6B, intaglio printed samples (C7 and C16) obtained according to a process different from the present invention, i.e. a process using an oxidative drying intaglio ink lacking one or more polythiol compounds (C7) or comprising said one or more polythiol compounds in a total amount not larger than 0.5 wt-% (C16), exhibited unacceptable set-off characteristics (and are thus unsuitable to be used for high-end applications (such as the preparation of security documents).

Contrary to the comparative examples, the intaglio printed samples (E2, E10 and E11) obtained with to the process according to the present invention, i.e. a process i) using an intaglio engraved printing plate heated at a printing plate temperature between about 45°C and about 85°C, preferably between 50°C and 80°C, and ii) using an oxidative drying intaglio ink comprising one or more fusible waxes and one or more polythiol compounds (E2, E10 and E11) in a total amount larger than 0.5 wt-%, preferably between about 0.75 wt-% and about 2.0 wt-%, exhibited acceptable to low set-off, making them suitable for high-end printing applications.

**Table 6C**

| | Ink | T of the intaglio engraved printing plate | Set-off | | |
|---|---|---|---|---|---|
| | | | Visual value | Transferred pixels (%) | Appreciation of set-off |
| **C7** | **I2**<br>W1, no TH | 65°C | 3.4 | n/a | unacceptable |
| **E2** | **I4**<br>W1, TH1 | 65°C | 7.0 | 6.7% | low |
| **C17** | **I10**<br>W2, no TH | 65°C | 1.8 | n/a | unacceptable |
| **E12** | **I11**<br>W2, TH1 | 65°C | 7.0 | 6.7% | low |
| **C18** | **I12**<br>W3, no TH | 65°C | 2.1 | n/a | unacceptable |
| **E13** | **I13**<br>W3, TH1 | 65°C | 6.4 | 9.1% | acceptable |
| **C19** | **I14** | 65°C | 1.6 | n/a | unacceptable |

(continued)

| | Ink | T of the intaglio engraved printing plate | Set-off | | |
|---|---|---|---|---|---|
| | | | Visual value | Transferred pixels (%) | Appreciation of set-off |
| | W4, no TH | | | | |
| **E14** | **I15** W4, TH1 | 65°C | 6.8 | 7.5% | low |

As shown in Table 6C, intaglio printed samples (C7 and C17-C19) obtained according to a process different from the present invention, i.e. a process using an oxidative drying intaglio ink lacking one or more polythiol compounds (C7 and C17-C19) exhibited unacceptable set-off characteristics and are thus unsuitable to be used for high-end applications (such as the preparation of security documents).

Contrary to the comparative examples, the intaglio printed samples (E2, E12-E14) obtained with to the process according to the present invention, i.e. a process i) using an intaglio engraved printing plate heated at a printing plate temperature between about 45°C and about 85°C, preferably between 50°C and 80°C, and ii) using an oxidative drying intaglio ink comprising one or more fusible waxes and one or more polythiol compounds (E2, E12-E14) exhibited acceptable to low set-off, making them suitable for high-end printing applications.

**Table 6D**

| | Ink | T of the intaglio engraved printing plate | Set-off | | |
|---|---|---|---|---|---|
| | | | Visual value | Transferred pixels (%) | Appreciation of set-off |
| **C20** | **I16** D1, no TH | 65°C | 4.1 | n/a | unacceptable |
| **E15** | **I17** D1, TH1 | 65°C | 8.3 | 3.5% | very low |
| **C21** | **I18** D2, no TH | 65°C | 4.8 | n/a | unacceptable |
| **E16** | **I19** D2, TH1 | 65°C | 8.5 | 3.2% | very low |
| **C22** | **I20** D3, no TH | 65°C | 5.5 | 14.3% | unacceptable |
| **E17** | **I21** D3, TH1 | 65°C | 11.0 | 0.9% | very low |
| **C23** | **I22** D4, no TH | 65°C | 4.1 | n/a | unacceptable |
| **E18** | **I23** D4, TH1 | 65°C | 9.1 | 2.3% | very low |

As shown in Table 6D, intaglio printed samples (C20-C23) obtained according to a process different from the present invention, i.e. a process using an oxidative drying intaglio ink lacking one or more polythiol compounds, exhibited unacceptable set-off characteristics and are thus unsuitable to be used for high-end applications (such as the preparation of security documents).

Contrary to the comparative examples, the intaglio printed samples (E15-E18) obtained with the process according to the present invention, i.e. a process i) using an intaglio engraved printing plate heated at a printing plate temperature between about 45°C and about 85°C, preferably between 50°C and 80°C, and ii) using an oxidative drying intaglio ink comprising one or more drying agents, one or more fusible waxes and one or more polythiol compounds exhibited very low set-off, making them suitable for high-end printing applications.

C. Preparation of white/transparent oxidative drying intaglio inks (E19-E22 and C24-C27)

The white/transparent oxidative drying intaglio inks (I24-I31, Table 8) used to prepare the printed samples (E19-E22 and C24-C27) were prepared by using three compositions: an ink premix (IP1-IP2, Table 7) comprising a fusible wax (W1), a mixture of driers (D1-D2, Table 2) and a polythiol compound (TH1, Table 3).
When present, the polythiol compound (TH1) was added to the ink premix (IP1-IP2), before the addition of one of the mixtures of driers (D1-D2), so as to generate the final intaglio inks (I24-31) as described in Table 8.
Examples (E19-E22) were prepared according to the process of the present invention and using inks comprising one or more fusible waxes and one or more polythiol compounds in the required amount.
Comparative examples (C24-C27) were prepared according to the process of the present invention and using inks comprising one or more fusible waxes but lacking the one or more polythiol compounds.

**Table 7**

| Ingredients | [wt-%] | |
|---|---|---|
| | **IP1** | **IP2** |
| **Urethane alkyd resin** (Urakyd AL210 Q55 from Synres, polyurethane modified long-oil alkyd resin based on soybean oil) | 13.0 | 13.0 |
| **Phenolic resin** (42.4 wt-% phenolic modified rosin ester (Bremapal 2035, Kraemer) cooked in 42.4 % tung oil (Interfat, CAS No 8001-20-5), then diluted with 15.2 wt-% n-dodecane (Halterman, CAS No 112-40-3)) | 6.0 | 6.0 |
| **Partially neutralized acidified polyester**<br>Condensation product of conjugated sunflower oil fatty acids (32.8 wt-%, A. Smit Trading, CAS No 68953-27-5), isophthalic acid (13.1 wt-%, Penpet, CAS No 121-91-5), tetrahydrophthalic anhydride (12.8 wt-%, Polynt, CAS No 85-43-8), trimethylolpropane (8.6 No wt-%, Sikem, CAS No 77-99-6) and pentaerythritol (7.4 wt-%, Penpet, CAS No 117-77-5) neutralized with potassium hydroxide 40 wt-% solution (6.2 wt-%, CAS No 1310-58-3)<br>Dodecyl benzenesulfonic acid salt of 2-amino-propane (19.1 wt-%, Zephrym™ 3300B, Croda, CAS No 84961-74-0) | 20.0 | 20.0 |
| **Fusible wax-1** (W1) carnauba wax (A. Smit Trading AG), melting T: 80°C | 5.0 | 5.0 |
| **Mineral oil,** C14-C18 hydrocarbons PKWF 6/9 AF (Haltermann) | 3.0 | 3.0 |
| **White pigment** (C.I. Pigment White 6, Billions TR52 from Lomon Billions, CAS No 13463-67-7) | 30.0 | |
| **Inorganic filler:** Luzenac talc (Imerys)<br>mixture of 50 wt-% talc (CAS No 14807-96-6), 47-wt-% chlorite-group minerals (CAS No 1318-59-8), 2 wt-% dolomite (16389-88-1) and 1 wt-% silica (CAS No 14808-60-7) | 1.0 | 1.0 |
| **Inorganic filler:** Omyalite® 50 (Omya)<br>limestone, CAS No 1317-65-3, particle size $d_{50}$ < 2 microns | 22.0 | 52.0 |

The ingredients described in Table 7 were first weighted and mixed together at room temperature using a SpeedMixer® (DAC 150 SP from Hauschild Engineering) for 3 minutes at 2500 rpm; subsequently they were ground on a Bühler SDY three-roll mill in three passes with a pressure of 5, 11 and 11 bars, respectively so at to produce the ink premixes (IP1-IP2).

**Table 8**

| Inks | | Ink premix wt-% | | Polythiol compound wt-% | Mixture of driers wt-% | | Viscosity Pa·s |
|---|---|---|---|---|---|---|---|
| | | IP1 | IP2 | TH1 | D1 | D2 | |
| white | I24 | 97.5 | | | 2.5 | | 13.4 |
| | I25 | 96.0 | | 1.5 | 2.5 | | 15.5 |
| | I26 | 97.0 | | | | 3.0 | 11.4 |
| | I27 | 95.5 | | 1.5 | | 3.0 | 12.4 |
| transparent | I28 | | 97.5 | | 2.5 | | 19.0 |
| | I29 | | 96.0 | 1.5 | 2.5 | | 18.1 |
| | I30 | | 97.0 | | | 3.0 | 14.8 |
| | I31 | | 95.5 | 1.5 | | 3.0 | 15.1 |

The white/transparent oxidative drying intaglio inks (I24-I31) described in Table 8 were prepared according to the following steps:

- the ink premixes (IP1-IP2) and the polythiol compound (TH1), when present, were independently weighted and mixed using a SpeedMixer® (DAC 150 SP from Hauschild Engineering) at room temperature for 90 seconds at 2500 rpm, and
- the mixtures of the driers (D1-D2) were independently added to the dispersed pastes obtained in the previous step and further mixed with the SpeedMixer® (DAC 150 SP from Hauschild Engineering) for 3 minutes at 2500 rpm.

The viscosity of the white/transparent oxidative drying intaglio inks (I24-I31) was independently measured using a Haake Roto Visco RV1 rotational rheometer, using a cone plate of 20 mm diameter and a 0.5° geometry, at a shear rate of 1000 $s^{-1}$ and a temperature of 40°C.

**D. Preparation of intaglio printed samples (E19-E22 and C24-C27) and assessment of color properties (Tables 9A-9B)**

The so-obtained white/transparent oxidative drying intaglio inks (I24-I31) were independently applied on a black/white Leneta card (Leneta Inc., Form 2A opacity chart) using a semi-automatic laboratory coater (K101 Control Coater, RK Print) equipped with a coating bar HC4 (nominal thickness 36 μm).

The intaglio printed samples (E19-E22 and C24-C27) were left to dry in the dark for 24 hours. Subsequently to this drying, their L*a*b* values according to CIELAB (1976) were independently recorded on the white part of the Leneta cards using a spectrophotometer DC 45IR from Datacolor (measurement geometry: 45/0°; spectral analyzer: proprietary dual channel holographic grating. 256-photodiode linear arrays used for both reference and sample channels; light source: total bandwidth LED illumination). These values are denoted $L^*_{initial}$, $a^*_{initial}$ and $b^*_{initial}$, respectively, in Table 9. All samples were then placed in an oven (40°C, 55% RH) for 14 days, which roughly corresponds to an ageing of two months at room temperature. L*a*b* values of all samples were measured again, and appear as $L^*_{aged}$, $a^*_{aged}$ and $b^*_{aged}$ in Table 9. ΔL*, Δa*, Δb* and ΔE* values indicated in Table 9 correspond to the color variation after 14 days at 40°C and 55% RH and were obtained by subtracting the "initial" values from the "aged" values.

Transparency values (indicated as ΔTr in Table 9) were obtained by measuring the L*a*b* values on the black part of the Leneta cards before ageing and comparing them with the L*a*b* values measured on the white part before ageing. ΔTr was obtained using the following equation:

$$\Delta Tr = \sqrt{(L^*_{white} - L^*_{black})^2 + (a^*_{white} - a^*_{black})^2 + (b^*_{white} - b^*_{black})^2}$$

A high value of ΔTr indicates a high transparency (and hence low opacity).

**Table 9**

| | | Ink | $L^*_{initial}$ | $a^*_{initial}$ | $b^*_{initial}$ | $L^*_{aged}$ | $a^*_{aged}$ | $b^*_{aged}$ | $\Delta L^*$ | $\Delta a^*$ | $\Delta b^*$ | $\Delta E^*$ | ΔTr |
|---|---|---|---|---|---|---|---|---|---|---|---|---|---|
| white inks | **E19** | **I25** D1, TH1 | 80.57 | 10.59 | 4.20 | 81.47 | 9.72 | 6.55 | 0.90 | -0.87 | 2.35 | 2.66 | 0.43 |
| | **E20** | **I27** D2, TH1 | 92.03 | 0.03 | 7.27 | 91.93 | -0.36 | 11.61 | -0.10 | -0.39 | 4.34 | 4.36 | 0.39 |
| | **C24** | **I24** D1, no TH | 90.89 | 0.90 | 7.91 | 89.63 | 0.79 | 13.56 | -1.26 | -0.11 | 5.65 | 5.79 | 0.39 |
| | **C25** | **I26** D2, no TH | 91.17 | 0.50 | 7.63 | 90.36 | 0.48 | 13.34 | -0.81 | -0.02 | 5.71 | 5.77 | 0.46 |
| transparent inks | **E21** | **I29** D1, TH1 | 37.02 | 21.84 | 12.87 | 37.32 | 23.25 | 17.69 | 0.3 | 1.41 | 4.82 | 5.03 | 10.5 |
| | **E22** | **I31** D2, TH1 | 72.82 | 3.05 | 29.68 | 68.53 | 8.99 | 44.23 | -4.29 | 5.94 | 14.55 | 16.29 | 27.4 |
| | **C26** | **I28** D1, no TH | 71.14 | 7.02 | 27.68 | 63.15 | 14.02 | 49.64 | -7.99 | 6.82 | 21.96 | 24.34 | 29.0 |
| | **C27** | **I30** D2, no TH | 72.82 | 6.01 | 29.04 | 67.01 | 10.82 | 48.02 | -5.81 | 4.81 | 18.98 | 20.42 | 32.0 |

**E. Comparison with offset printing**

The process according to the present invention, i.e. an intaglio printing process comprising a step a) of inking an intaglio engraved printing plate with an oxidative drying intaglio ink, said intaglio engraved printing plate being at a printing plate temperature between about 45°C and about 85°C, said oxidative drying intaglio ink comprising i) at least one oxidative drying varnish, ii) one or more driers in a total amount from about 0.01 wt-% to about 10 wt-%, iii) one or more polythiol compounds present in a total amount larger than 0.5 wt-%, preferably in a total amount from about 0.75 wt-% and 2 wt-%, and iv) one or more fusible waxes present in a total amount from about 1 wt-% to about 10 wt-%, was compared with a similar process using oxidative drying offset inks comprising comparable amounts of one or more fusible waxes and polythiol compounds of identical chemical formula. Oxidative drying offset inks are comparable to intaglio inks since both inks are highly viscous inks comprising high molecular weight compounds of similar composition (such as urethane alkyds and phenolic resins) and high amounts of pigments / fillers (typically in excess of 20 wt-%).

**Table 10**

| Ingredients | [wt-%] | | | | | |
|---|---|---|---|---|---|---|
| | **OF1** | **OF2** | **OF3** | **OF4** | **OF5** | **OF6** |
| **Urethane alkyd resin,** Urakyd AD85 (Synres) | 35.08 | 33.19 | 33.19 | 34.38 | 32.49 | 32.49 |
| **Phenolic resin,** condensation product of tung oil (40 wt-%, Interfat, CAS No 8001-20-5), phenolic resin (40 wt-%, mixture of Elaztobond™ T600 and SMD31144 from SI Group) and mineral oil (20 wt-%, PKWF 6/9 AF, Haltermann, CAS No 927-632-8) | 39.47 | 37.36 | 37.36 | 38.67 | 36.56 | 36.56 |
| **Fusible wax-1** carnauba wax (A. Smit Trading AG), melting T: 80°C | | 4 | | | 4 | |
| **Fusible wax-4** paraffin S-394 N1 (Shamrock), melting T: 113°C | | | 4 | | | 4 |
| **Polythiol compound TH1,** pentaerythritol tetra(3-mercaptopropionate) (CAS No 7575-23-7, BRUNO BOCK Chemische Fabrik GmbH & Co. KG) THIOCURE ® 340 | | | | 1.5 | 1.5 | 1.5 |
| **Pigments,** CI Pigment Red 146 (TCR14603Y, Trust Chem, CAS No 5280-68-2) | 11 | 11 | 11 | 11 | 11 | 11 |
| **Pigments,** CI Pigment Red 185 (Novoperm Carmine HF4C, Clariant, CAS No 61951-98-2) | 5 | 5 | 5 | 5 | 5 | 5 |
| **Pigments,** CI Pigment Yellow 13 (TCY01302, Trust Chem, CAS No 5102-83-0) | 5 | 5 | 5 | 5 | 5 | 5 |
| **Pigments,** CI Pigment Blue 15:3 (Heliogen Blue D7079, BASF, CAS No 147-14-8) | 2.2 | 2.2 | 2.2 | 2.2 | 2.2 | 2.2 |
| **Antioxidant,** tert-butyl hydroquinone 97% (CAS No 1948-33-0, SIGMA-ALDRICH) | 0.25 | 0.25 | 0.25 | 0.25 | 0.25 | 0.25 |
| **Mixture of driers:** 40wt-% 2-ethylhexanoic acid, cobalt salt (Octa-Soligen® cobalt oil, 12 wt-% Co, 75 wt-% CAS No 136-52-7 + 25 wt-% CAS No 927-632-8) and 60 wt-% 2-ethylhexanoic acid, manganese salt (Octa-Soligen® manganese oil, 8 wt-% Mn, 50 wt-% CAS No 15956-58-8 + 50 wt-% CAS No 927-632-8) | 2 | 2 | 2 | 2 | 2 | 2 |
| **Viscosity Pa·s** | 9.9 | n/a | n/a | n/a | n/a | n/a |

The oxidative drying offset inks (OF1-OF6) were prepared by mixing by hand with a spatula at room temperature the ingredients listed in Table 10 except the mixture of driers. The so-obtained paste was ground on a Bühler SDY three roll mill in three passes (a first pass at a pressure of 6 bars, a second and a third pass at a pressure of 12 bars). The mixture of driers was added to the paste and about 10 g of the so-obtained compositions were mixed in a SpeedMixer® (DAC 150 SP from Hauschild Engineering) at a speed of 2500 rpm for three minutes at room temperature. The viscosity of the ink OF1

was measured using a Haake Roto Visco RV1 rotational rheometer, using a cone plate of 20 mm diameter and a 0.5° geometry, at a shear rate of 1000 $s^{-1}$ and a temperature of 40°C.

With the aim of mimicking an offset printing process, the oxidative drying offset printing inks (OF1-OF6) were independently applied as a pattern (4.5 cm x 23 cm) on a blank sheet of fiduciary cotton substrate (Louisenthal) using a Multipurpose Printability tester from Prüfbau at a pressure of 1000 N (T = 22°C, relative humidity = 54 %). The amount of applied ink was 1 $g/m^2 \pm 0.05 g/m^2$.

Two series of tests were carried out. In a first series (corresponding to C28-C33 in Table 11), the printed samples were left to dry in the dark for 24 hours at 23°C and 55% RH before submitting them to the set-off assessment procedure described hereafter. A second series (corresponding to C34-39 in Table 11) was first put in an oven at 65°C for about 15 seconds, then left to dry in the dark for 24 hours before submitting them to the set-off assessment. The process used to obtain the first series (C28-C33) aimed at mimicking a classical offset printing process (wherein no heating step is involved) while the process including a heating step used to obtain the second series (C34-C39) was more similar to the process of the present invention, wherein said processes used oxidative drying offset inks (OF1-OF6) described in Table 10 instead of oxidative drying intaglio inks.

A set-off test was carried out by placing a piece of blank substrate (i.e. an unprinted substrate) on the front side of the substrate carrying the printed and dried layer and by submitting the so-formed assembly to a counter-pressure of 3.4 bar at 65°C with an ORMAG Intaglio Proof Press. The substrate carrying the printed and dried layer and the blank substrate were separated and the optical density (OD) of the blank substrate was checked for ink transfer (set-off).

Set-off characteristics are provided in Table 11 and have been assessed according to the following equation:

$$Drying\ efficiency\ (\%) = \frac{OD_{max} - OD}{OD_{max} - OD_{min}} \cdot 100$$

wherein

*OD* is the obtained value,
$OD_{max}$ is the optical density at maximum set-off and corresponds to a drying efficiency of 0%,
$OD_{min}$ is the optical density obtained in the complete absence of set-off and corresponds to a drying efficiency of 100%,
two blanks were prepared to define the two possible extremes of the drying behavior, $OD_{max}$ and $OD_{min}$,
$OD_{max}$ being obtained by measuring a sample obtained by counterpressure of a fresh ink layer directly after printing,
$OD_{min}$ being measured on a sample of unprinted sample, and
the optical density values were obtained by a GretagMacbeth D19C densitometer (average of two measurements).

With the aim of comparing these results with the results obtained for the intaglio printing processes as "transferred pixels in %" provided hereabove, this equation was modified to express the drying efficiency in % as "transferred optical density in %":

$$Transferred\ optical\ density\ (\%) = 100\% - drying\ efficiency\ (\%) = \frac{OD - OD_{min}}{OD_{max} - OD_{min}} \cdot 100$$

**Table 11**

| | Ink | Heating step (65°C) | Drying efficiency | Transferred OD |
|---|---|---|---|---|
| C28 | **OF1** no wax, no TH | no | 73.8 % | 26.2 % |
| C34 | | yes | 77.7 % | 22.3 % |
| C29 | **OF2** W1, no TH | no | 73.4 % | 26.6 % |
| C35 | | yes | 75.0 % | 25.0 % |
| C30 | **OF3** W4, no TH | no | 73.4 % | 26.6 % |
| C36 | | yes | 72.6 % | 27.4 % |

(continued)

| | Ink | Heating step (65°C) | Drying efficiency | Transferred OD |
|---|---|---|---|---|
| C31 | **OF4** no wax, TH1 | no | 79.0 % | 21.0 % |
| C37 | | yes | 85.1 % | 14.9 % |
| C32 | **OF5** W1, TH1 | no | 72.5 % | 27.5 % |
| C38 | | yes | 74.6 % | 25.4 % |
| C33 | **OF6** W4, TH1 | no | 76.9 % | 23.1 % |
| C39 | | yes | 83.7 % | 17.3% |

Even though a direct comparison between the values obtained by the intaglio printing process according to the present invention examples (E1-E18, transferred pixels (%)) and comparative intaglio processes (C1-C23, transferred pixels (%)) with the values obtained for samples made by offset printing processes examples (C28-C39, transferred optical density (%)) is not relevant since the processes are different, relative comparisons are possible. As shown in Table 11, the addition of one or more fusible waxes and/or one or more polythiol compounds in oxidative drying offset inks did not impact the drying performance of said inks. In particular, adding both the one or more fusible waxes and the one or more polythiol compounds led to a decrease of the drying performance or did not significantly improve said performance. Adding a heating step (65°C) after offset printing did not significantly improve the drying performance (see C38 *vs* C32 or C39 *vs* C33).

## Claims

1. A process for producing a security feature on a substrate by an intaglio printing process comprising

   a step a) of inking an intaglio engraved printing plate with an oxidative drying intaglio ink, said intaglio engraved printing plate being at a printing plate temperature between about 45°C and about 85°C, said oxidative drying intaglio ink comprising:

   i) at least one oxidative drying varnish,
   ii) one or more driers in a total amount from about 0.01 wt-% to about 10 wt-%,
   iii) one or more polythiol compounds present in a total amount larger than 0.5 wt-%, preferably in a total amount from about 0.75 wt-% and 2 wt-%, and
   iv) one or more fusible waxes present in a total amount from about 1 wt-% to about 10 wt-%,

   the weight percents being based on the total weight of the oxidative drying intaglio ink;
   a step b) of wiping off any excess the oxidative drying intaglio ink using a paper or a tissue wiping system or using a polymeric wiping cylinder and cleaning said polymeric wiping cylinder with an alkaline aqueous wiping solution in combination with one or more mechanical means;
   a step c) of transferring said oxidative drying intaglio ink in the form of the security feature on the substrate; and
   a step d) of drying the oxidative drying intaglio ink in the presence of air so as to form the security feature.

2. The process according to claim 1, wherein the intaglio engraved printing plate has a printing plate temperature between about 50°C and about 80°C.

3. The process according to claim 1 or 2, wherein the at least one oxidative drying varnish is present in the oxidative drying intaglio ink in an amount from about 10 to about 90 wt-%, the weight percents being based on the total weight of the oxidative drying intaglio ink.

4. The process according to any one of claims 1 to 3, wherein the one or more polythiol compounds are selected from the group consisting of dithiol compounds, trithiol compounds, tetrathiol compounds and mixtures thereof.

5. The process according to claim 4, wherein at least one of the dithiol compounds is ethylene gylcol bis(3-mercaptopropionate) and/or at least one of the trithiol compounds is tris[2-(3-mercaptopropionyloxy)ethyl]isocyanurate and/or at least one of the tetrathiol compounds is pentaerythritol tetra(3-mercaptopropionate).

6. The process according to any one of claims 1 to 5, wherein the one or more fusible waxes have a melting temperature between about 50°C and about 120°C.

7. The process according to claim 6, wherein the one or more waxes are selected from the group consisting of microcrystalline waxes, paraffin waxes, polyethylene waxes, fluorocarbon waxes, polytetrafluoroethylene waxes, Fischer-Tropsch waxes, silicone fluids, beeswaxes, candelilla waxes, montan waxes, carnauba waxes, rice bran waxes and mixtures thereof.

8. The process according to any one of claims 1 to 7, wherein the one or more driers are polyvalent salts containing cobalt, calcium, copper, zinc, iron, zirconium, manganese, barium, zinc, strontium, lithium, vanadium and potassium as cation(s) and halides, nitrates, sulphates, carboxylates like acetates, ethylhexanoates, octanoates and naphtenates or acetoacetonates as anion(s).

9. The process according to claim 8, wherein the oxidative drying intaglio ink further comprises one or more driers being metal complexes and/or metal complex salts, preferably manganese complexes, manganese complex salts, vanadium complexes, vanadium complex salts, iron complexes and iron complex salts.

10. The process according to any one of claims 1 to 9, wherein the oxidative drying intaglio ink further comprises one or more fillers or extenders in a total amount from about 0.1 wt-% to about 50 wt-%, the weight percents being based on the total weight of the oxidative drying intaglio ink.

11. The process according to claim 10, wherein the or more fillers or extenders are selected from the group consisting of talcs, micas, montmorillonites, bentonites, wollastonites, halloysites, calcined clays, china clays, carbonates, silicates, vermiculites, amorphous silica, wood flours, natural fibers, synthetic fibers and mixtures thereof.

12. The process according to any one of claims 1 to 11, wherein the oxidative drying intaglio ink further comprises one or more coloring components selected from the group consisting of optically variable pigments, color constant pigments, dyes and mixtures thereof, preferably selected from the group consisting of color constant organic pigments, color constant inorganic pigments and mixtures thereof.

13. The process according to any one of claims 1 to 12, wherein the oxidative drying intaglio ink further comprises one or more machine readable materials preferably selected from the group consisting of magnetic materials, luminescent materials, electrically conductive materials, infrared-absorbing materials and mixtures thereof and/or one or more forensic taggants.

14. The process according to any one of claims 1 to 13, wherein the substrate is selected from the group consisting of papers or other fibrous materials, paper-containing materials, plastics and polymers, metalized plastics or polymers, composite materials and mixtures or combinations thereof.

15. A security feature made by a process recited in any one of claims 1 to 14.

## Patentansprüche

1. Verfahren zur Herstellung eines Sicherheitsmerkmals auf einem Substrat durch ein Tiefdruckverfahren, das aufweist:

einen Schritt a) des Farbauftragens auf eine gravierte Tiefdruckplatte mit einer oxidativ trocknenden Tiefdruckfarbe, wobei die gravierte Tiefdruckplatte eine Druckplattentemperatur zwischen etwa 45°C und etwa 85°C aufweist, wobei die oxidativ trocknende Tiefdruckfarbe aufweist:

i) mindestens einen oxidativ trocknenden Lack,
ii) einen oder mehrere Trockner in einer Gesamtmenge von etwa 0,01 Gew.-% bis etwa 10 Gew.-%,
iii) eine oder mehrere Polythiolverbindungen in einer Gesamtmenge von mehr als 0,5 Gew.-%, vorzugsweise in einer Gesamtmenge von etwa 0,75 Gew.-% bis 2 Gew.-%, und
iv) ein oder mehrere schmelzbare Wachse in einer Gesamtmenge von etwa 1 Gew.-% bis etwa 10 Gew.-%,

wobei die Gewichtsprozente auf das Gesamtgewicht der oxidativ trocknenden Tiefdruckfarbe bezogen sind;
einen Schritt b) des Abwischens von überschüssiger oxidativ trocknender Tiefdruckfarbe unter Verwendung

eines Papier- oder Wischtuchsystems oder unter Verwendung eines polymeren Wischzylinders und des Reinigens des polymeren Wischzylinders mit einer alkalischen wässrigen Wischlösung in Kombination mit einem oder mehreren mechanischen Mitteln;
einen Schritt c) des Übertragens der oxidativ trocknenden Tiefdruckfarbe in Form des Sicherheitsmerkmals auf das Substrat; und
einen Schritt d) des Trocknens der oxidativ trocknenden Tiefdruckfarbe in Gegenwart von Luft, um das Sicherheitsmerkmal zu bilden.

**2.** Verfahren nach Anspruch 1, wobei die gravierte Tiefdruckplatte eine Druckplattentemperatur zwischen etwa 50°C und etwa 80°C aufweist.

**3.** Verfahren nach Anspruch 1 oder 2, wobei der mindestens eine oxidativ trocknende Lack in der oxidativ trocknenden Tiefdruckfarbe in einer Menge von etwa 10 bis etwa 90 Gew.-% vorhanden ist, wobei die Gewichtsprozente auf das Gesamtgewicht der oxidativ trocknenden Tiefdruckfarbe bezogen sind.

**4.** Verfahren nach einem der Ansprüche 1 bis 3, wobei die eine oder die mehreren Polythiolverbindungen aus der Gruppe ausgewählt sind, die aus Dithiolverbindungen, Trithiolverbindungen, Tetrathiolverbindungen und Mischungen davon besteht.

**5.** Verfahren nach Anspruch 4, wobei mindestens eine der Dithiolverbindungen Ethylengylkolbis(3-mercaptopropionat) ist und/oder mindestens eine der Trithiolverbindungen Tris[2-(3-mercaptopropionyloxy)ethyl]isocyanurat ist und/oder mindestens eine der Tetrathiolverbindungen Pentaerythrittetra(3-mercaptopropionat) ist.

**6.** Verfahren nach einem der Ansprüche 1 bis 5, wobei das eine oder die mehreren schmelzbaren Wachse eine Schmelztemperatur zwischen etwa 50°C und etwa 120°C haben.

**7.** Verfahren nach Anspruch 6, wobei das eine oder die mehreren Wachse aus der Gruppe ausgewählt sind, die aus mikrokristallinen Wachsen, Paraffinwachsen, Polyethylenwachsen, Fluorkohlenstoffwachsen, Polytetrafluorethylenwachsen, Fischer-Tropsch-Wachsen, Silikonölen, Bienenwachsen, Candelillawachsen, Montanwachsen, Carnaubawachsen, Reiskleiewachsen und deren Mischungen besteht.

**8.** Verfahren nach einem der Ansprüche 1 bis 7, wobei der eine oder die mehreren Trockner mehrwertige Salze sind, die Kobalt, Kalzium, Kupfer, Zink, Eisen, Zirkonium, Mangan, Barium, Zink, Strontium, Lithium, Vanadium und Kalium als Kation(en) und Halogenide, Nitrate, Sulfate, Carboxylate wie Acetate, Ethylhexanoate, Octanoate und Naphtenate oder Acetoacetonate als Anion(en) enthalten.

**9.** Verfahren nach Anspruch 8, wobei die oxidativ trocknende Tiefdruckfarbe ferner einen oder mehrere Trockner aufweist, die Metallkomplexe und/oder Metallkomplexsalze sind, vorzugsweise Mangankomplexe, Mangankomplexsalze, Vanadiumkomplexe, Vanadiumkomplexsalze, Eisenkomplexe und Eisenkomplexsalze.

**10.** Verfahren nach einem der Ansprüche 1 bis 9, wobei die oxidativ trocknende Tiefdruckfarbe ferner einen oder mehrere Füllstoffe oder Streckmittel in einer Gesamtmenge von etwa 0,1 Gew.-% bis etwa 50 Gew.-% aufweist, wobei die Gewichtsprozente auf das Gesamtgewicht der oxidativ trocknenden Tiefdruckfarbe bezogen sind.

**11.** Verfahren nach Anspruch 10, wobei der eine oder die mehreren Füllstoffe oder Streckmittel aus der Gruppe ausgewählt sind, die aus Talken, Glimmern, Montmorilloniten, Bentoniten, Wollastoniten, Halloysiten, kalzinierten Tonen, Porzellantonen, Carbonaten, Silikaten, Vermiculiten, amorphem Siliciumdioxid, Holzmehlen, Naturfasern, synthetischen Fasern und Mischungen davon besteht.

**12.** Verfahren nach einem der Ansprüche 1 bis 11, wobei die oxidativ trocknende Tiefdruckfarbe ferner einen oder mehrere farbgebende Bestandteile aufweist, die aus der Gruppe ausgewählt sind, die aus optisch variablen Pigmenten, farbkonstanten Pigmenten, Farbstoffen und Mischungen davon besteht, vorzugsweise aus der Gruppe ausgewählt sind, die aus farbkonstanten organischen Pigmenten, farbkonstanten anorganischen Pigmenten und Mischungen davon besteht.

**13.** Verfahren nach einem der Ansprüche 1 bis 12, wobei die oxidativ trocknende Tiefdruckfarbe ferner ein oder mehrere maschinenlesbare Materialien aufweist, die vorzugsweise aus der Gruppe ausgewählt sind, die aus magnetischen Materialien, lumineszierenden Materialien, elektrisch leitfähigen Materialien, infrarotabsorbierenden Materialien und

Mischungen davon und/oder einem oder mehreren forensischen Taggants besteht.

**14.** Verfahren nach einem der Ansprüche 1 bis 13, wobei das Substrat aus der Gruppe ausgewählt ist, die aus Papieren oder anderen faserigen Materialien, papierhaltigen Materialien, Kunststoffen und Polymeren, metallisierten Kunststoffen oder Polymeren, Verbundwerkstoffen und Mischungen oder Kombinationen davon besteht.

**15.** Sicherheitsmerkmal, das durch ein Verfahren nach einem der Ansprüche 1 bis 14 hergestellt ist.

## Revendications

**1.** Procédé pour produire une caractéristique de sécurité sur un substrat par un procédé d'impression en creux comprenant

une étape a) d'encrage d'une plaque d'impression en creux gravée avec une encre pour impression en creux à séchage oxydatif, ladite plaque d'impression en creux gravée étant à une température de plaque d'impression entre environ 45 °C et environ 85 °C, ladite encre pour impression en creux à séchage oxydatif comprenant :

i) au moins un vernis à séchage oxydatif,
ii) un ou plusieurs agents de séchage en une quantité totale d'environ 0,01 % en poids à environ 10 % en poids,
iii) un ou plusieurs composés polythiol présents en une quantité totale supérieure à 0,5 % en poids, de préférence en une quantité totale d'environ 0,75 % en poids et 2 % en poids, et
iv) une ou plusieurs cires fusibles présentes en une quantité totale d'environ 1 % en poids à environ 10 % en poids,

les pourcentages en poids étant basés sur le poids total de l'encre pour impression en creux à séchage oxydatif ;
une étape b) d'essuyage de tout excès de l'encre pour impression en creux à séchage oxydatif en utilisant un système d'essuyage en papier ou en tissu ouaté ou en utilisant un cylindre d'essuyage polymère et en nettoyant ledit cylindre d'essuyage polymère avec une solution aqueuse alcaline d'essuyage en combinaison avec un ou plusieurs moyens mécaniques ;
une étape c) de transfert de ladite encre pour impression en creux à séchage oxydatif sous la forme de la caractéristique de sécurité sur le substrat ; et
une étape d) de séchage de l'encre pour impression en creux à séchage oxydatif en présence d'air de façon à former la caractéristique de sécurité.

**2.** Procédé selon la revendication 1, dans lequel la plaque d'impression en creux gravée a une température de plaque d'impression entre environ 50 °C et environ 80 °C.

**3.** Procédé selon la revendication 1 ou 2, dans lequel l'au moins un vernis à séchage oxydatif est présent dans l'encre pour impression en creux à séchage oxydatif en une quantité d'environ 10 à environ 90 % en poids, les pourcentages en poids étant basés sur le poids total de l'encre pour impression en creux à séchage oxydatif.

**4.** Procédé selon l'une quelconque des revendications 1 à 3, dans lequel les un ou plusieurs composés polythiol sont choisis dans le groupe constitué de composés dithiol, de composés trithiol, de composés tétrathiol et de mélanges de ceux-ci.

**5.** Procédé selon la revendication 4, dans lequel au moins l'un des composés dithiol est du bis(3-mercaptopropionate) d'éthylène gylcol et/ou au moins l'un des composés trithiol est du tris[2-(3-mercaptopropionyloxy)éthyl]isocyanurate et/ou au moins l'un des composés tétrathiol est du tétra(3-mercaptopropionate) de pentaérythritol.

**6.** Procédé selon l'une quelconque des revendications 1 à 5, dans lequel les une ou plusieurs cires fusibles ont une température de fusion entre environ 50 °C et environ 120 °C.

**7.** Procédé selon la revendication 6, dans lequel les une ou plusieurs cires sont choisies dans le groupe constitué des cires microcristallines, des paraffines, des cires de polyéthylène, des cires fluorocarbonées, des cires de polytétrafluoroéthylène, des cires de Fischer-Tropsch, des fluides de silicone, des cires d'abeille, des cires de candelilla, des cires de montan, des cires de carnauba, des cires de son de riz et des mélanges de celles-ci.

8. Procédé selon l'une quelconque des revendications 1 à 7, dans lequel les un ou plusieurs agents de séchage sont des sels polyvalents contenant du cobalt, du calcium, du cuivre, du zinc, du fer, du zirconium, du manganèse, du baryum, du zinc, du strontium, du lithium, du vanadium et du potassium comme cation(s) et des halogénures, des nitrates, des sulfates, des carboxylates tels que des acétates, des éthylhexanoates, des octanoates et des naphténates ou des acétoacétonates comme anion(s).

9. Procédé selon la revendication 8, dans lequel l'encre pour impression en creux à séchage oxydatif comprend en outre un ou plusieurs agents de séchage étant des complexes de métal et/ou des sels de complexes de métal, de préférence des complexes de manganèse, des sels de complexes de manganèse, des complexes de vanadium, des sels de complexes de vanadium, des complexes de fer et des sels de complexes de fer.

10. Procédé selon l'une quelconque des revendications 1 à 9, dans lequel l'encre pour impression en creux à séchage oxydatif comprend en outre un(e) ou plusieurs charges ou produits d'addition en une quantité totale d'environ 0,1 % en poids à environ 50 % en poids, les pourcentages en poids étant basés sur le poids total de l'encre pour impression en creux à séchage oxydatif.

11. Procédé selon la revendication 10, dans lequel les ou plusieurs charges ou produits d'addition sont choisi(e)s dans le groupe constitué des talcs, des micas, des montmorillonites, des bentonites, des wollastonites, des halloysites, des argiles calcinées, des terres à porcelaine, des carbonates, des silicates, des vermiculites, de la silice amorphe, des farines de bois, des fibres naturelles, des fibres synthétiques et des mélanges de ceux-ci.

12. Procédé selon l'une quelconque des revendications 1 à 11, dans lequel l'encre pour impression en creux à séchage oxydatif comprend en outre un ou plusieurs composants colorants choisis dans le groupe constitué des pigments optiquement variables, des pigments à constance des couleurs, des colorants et des mélanges de ceux-ci, de préférence choisis dans le groupe constitué des pigments organiques à constance des couleurs, des pigments inorganiques à constance des couleurs et des mélanges de ceux-ci.

13. Procédé selon l'une quelconque des revendications 1 à 12, dans lequel l'encre pour impression en creux à séchage oxydatif comprend en outre un ou plusieurs matériaux lisibles par une machine de préférence choisis dans le groupe constitué des matériaux magnétiques, des matériaux luminescents, des matériaux électroconducteurs, des matériaux absorbant les infrarouges et des mélanges de ceux-ci et/ou d'un ou plusieurs traceurs pour répression des fraudes.

14. Procédé selon l'une quelconque des revendications 1 à 13, dans lequel le substrat est choisi dans le groupe constitué de papiers ou autres matériaux fibreux, matériaux contenant du papier, plastiques et polymères, plastiques ou polymères métallisés, matériaux composites et mélanges ou combinaisons de ceux-ci.

15. Caractéristique de sécurité obtenue par un procédé selon l'une quelconque des revendications 1 à 14.

Figure 1

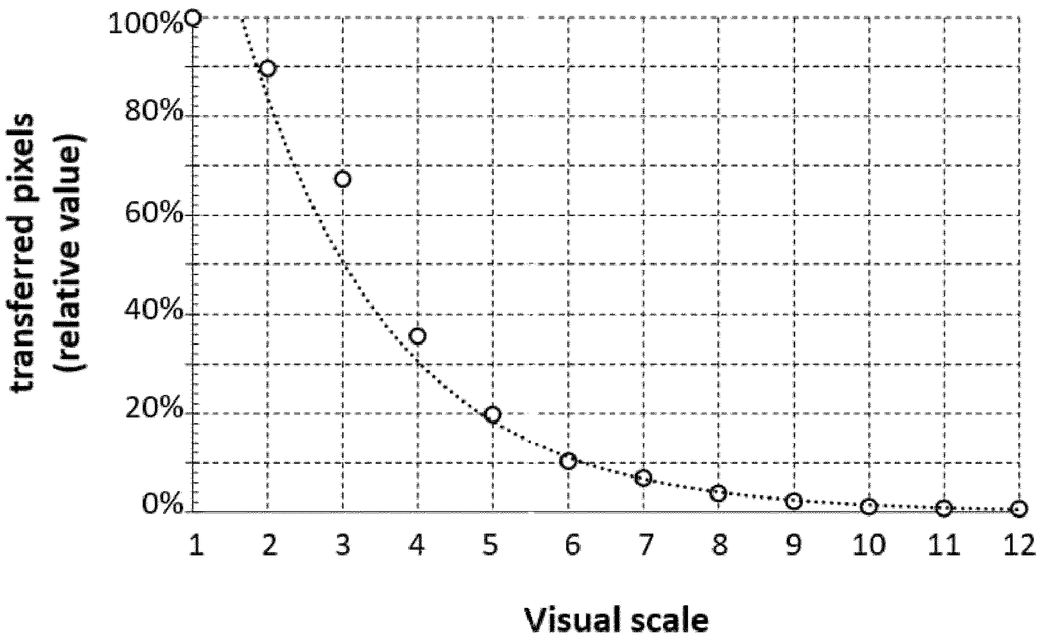
transferred pixels
(relative value)
100%
80%
60%
40%
20%
0%
1
2
3
4
5
6
7
8
9
10
11
12
Visual scale

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020079154 A
- EP 0340163 B1
- EP 2014729 A1
- US 5074914 A
- US 5997622 A
- US 6001161 A
- JP 2080470 A
- JP 62190272 A
- JP 63218766 A
- US 4705300 A
- US 4705356 A
- US 4721271 A
- US 5084351 A
- US 5214530 A
- US 5281480 A
- US 5383995 A
- US 5569535 A
- US 5571624 A
- WO 2008083894 A2
- US 5211877 A
- US 5362315 A
- US 6423246 B
- EP 1213338 A1
- EP 1046692 A1
- EP 0601483 A1


### Non-patent literature cited in the description


- *CHEMICAL ABSTRACTS*, 544-64-9
- *CHEMICAL ABSTRACTS*, 373-49-9
- *CHEMICAL ABSTRACTS*, 112-80-1
- *CHEMICAL ABSTRACTS*, 506-23-0
- *CHEMICAL ABSTRACTS*, 623-99-4
- *CHEMICAL ABSTRACTS*, 60-33-3
- *CHEMICAL ABSTRACTS*, 463-40-1
- *CHEMICAL ABSTRACTS*, 20290-75-9
- *CHEMICAL ABSTRACTS*, 506-32-1
- *CHEMICAL ABSTRACTS*, 141-22-0
- *CHEMICAL ABSTRACTS*, 112-86-7
- *CHEMICAL ABSTRACTS*, 29204-02-2
- *CHEMICAL ABSTRACTS*, 24880-45-3
- *CHEMICAL ABSTRACTS*, 68378-49-4
- *CHEMICAL ABSTRACTS*, 111-46-6
- *CHEMICAL ABSTRACTS*, 928-98-3
- *CHEMICAL ABSTRACTS*, 188194-74-3
- *CHEMICAL ABSTRACTS*, 1191-43-1
- *CHEMICAL ABSTRACTS*, 3232-05-1
- *CHEMICAL ABSTRACTS*, 17809-99-3
- *CHEMICAL ABSTRACTS*, 3570-55-6
- *CHEMICAL ABSTRACTS*, 35330-71-3
- *CHEMICAL ABSTRACTS*, 35330-70-2
- *CHEMICAL ABSTRACTS*, 25423-55-6
- *CHEMICAL ABSTRACTS*, 60147-09-3
- *CHEMICAL ABSTRACTS*, 7344-22-1
- *CHEMICAL ABSTRACTS*, 123-81-9
- *CHEMICAL ABSTRACTS*, 96663-89-7
- *CHEMICAL ABSTRACTS*, 2227318-91-2
- *CHEMICAL ABSTRACTS*, 24293-42-3
- *CHEMICAL ABSTRACTS*, 22504-50-3
- *CHEMICAL ABSTRACTS*, 14974-53-9
- *CHEMICAL ABSTRACTS*, 26424-84-0
- *CHEMICAL ABSTRACTS*, 10193-96-1
- *CHEMICAL ABSTRACTS*, 33007-83-9
- *CHEMICAL ABSTRACTS*, 345352-19-4
- *CHEMICAL ABSTRACTS*, 36196-44-8
- *CHEMICAL ABSTRACTS*, 10193-99-4
- *CHEMICAL ABSTRACTS*, 7575-23-7
- *CHEMICAL ABSTRACTS*, 916903-92-9
- *CHEMICAL ABSTRACTS*, 1622079-69-9
- *CHEMICAL ABSTRACTS*, 25359-71-1
- **G. PFAFF** ; **P. REYNDERS**. *Chem. Rev.*, 1999, vol. 99, 1963-1981
- *CHEMICAL ABSTRACTS*, 8001-20-5
- *CHEMICAL ABSTRACTS*, 112-40-3
- *CHEMICAL ABSTRACTS*, 1333-86-4
- *CHEMICAL ABSTRACTS*, 1317-65-3
- *CHEMICAL ABSTRACTS*, 68953-27-5
- *CHEMICAL ABSTRACTS*, 121-91-5
- *CHEMICAL ABSTRACTS*, 85-43-8
- *CHEMICAL ABSTRACTS*, 77-99-6
- *CHEMICAL ABSTRACTS*, 117-77-5
- *CHEMICAL ABSTRACTS*, 1310-58-3
- *CHEMICAL ABSTRACTS*, 84961-74-0
- *CHEMICAL ABSTRACTS*, 14807-96-6
- *CHEMICAL ABSTRACTS*, 1318-59-8

- *CHEMICAL ABSTRACTS*, 16389-88-1
- *CHEMICAL ABSTRACTS*, 14808-60-7
- *CHEMICAL ABSTRACTS*, 15956-58-8
- *CHEMICAL ABSTRACTS*, 927-632-8
- *CHEMICAL ABSTRACTS*, 22464-99-9
- *CHEMICAL ABSTRACTS*, 918-481-9
- *CHEMICAL ABSTRACTS*, 136-52-7
- *CHEMICAL ABSTRACTS*, 478945-46-9
- *CHEMICAL ABSTRACTS*, 57-55-6
- *CHEMICAL ABSTRACTS*, 111-90-0
- *CHEMICAL ABSTRACTS*, 13463-67-7
- *CHEMICAL ABSTRACTS*, 5280-68-2
- *CHEMICAL ABSTRACTS*, 61951-98-2
- *CHEMICAL ABSTRACTS*, 5102-83-0
- *CHEMICAL ABSTRACTS*, 147-14-8
- *CHEMICAL ABSTRACTS*, 1948-33-0